# NEUE EUROPÄISCHE PATENTSCHRIFT

(11) **EP 1 907 826 B2**
(45) Veröffentlichungstag und Bekanntmachung des Hinweises auf die Entscheidung über den Einspruch: **25.11.2020**
(45) Hinweis auf die Patenterteilung: 26.08.2009
(21) Anmeldenummer: 06762757.0
(22) Anmeldetag: 21.07.2006
(51) Int. Cl.: G01N 21/64, G02B 21/00

(54) **AUFLÖSUNGSGESTEIGERTE LUMINESZENZ-MIKROSKOPIE**
LUMINESCENCE MICROSCOPY WITH ENHANCED RESOLUTION
MICROSCOPIE A LUMINESCENCE A RESOLUTION AMELIOREE

(30) Priorität: 22.07.2005 DE 102005034443; 18.04.2006 DE 102006017841
(43) Veröffentlichungstag der Anmeldung: 09.04.2008
(60) Teilanmeldung: 08007103.8
(73) Patentinhaber: Carl Zeiss MicroImaging GmbH, 07745 Jena (DE)
(72) Erfinder: WOLLESCHENSKY, Ralf, 07743 Jena (DE); KEMPE, Michael, 07751 Kunitz (DE)
(74) Vertreter: Patentanwälte Geyer, Fehners & Partner mbB
(86) Internationale Anmeldenummer: PCT/EP2006/007212
(87) Internationale Veröffentlichungsnummer: WO 2007/009812

(56) Entgegenhaltungen:
- WO-A-00/52512
- WO-A-2004/008217
- WO-A2-2004/090617
- WO-A2-2004/090950
- DE-A1- 4 416 558
- DE-A1- 10 105 391
- DE-A1- 10 325 460
- US-A1- 2001 045 523
- US-A1- 2004 212 799
- US-B1- 6 667 830
- US-B2- 6 633 432
- HELL S. W., KROUG M.: "GROUND-STATE-DEPLETION FLUORSCENCE MICROSCOPY: A CONCEPT FOR BREAKING THE DIFFRACTION RESOLUTION LIMIT.", APPLIED PHYSICS B: LASERS AND OPTICS., SPRINGER INTERNATIONAL, BERLIN., DE, vol. B60., no. 5, 1 May 1995 (1995-05-01), pages 495-497, DE ISSN: 0946-2171, DOI: 10.1007/BF01081333
- Hell S W; Jakobs S; Kastrup L: "Imaging and writing at the nanoscale with focused visible light through saturable optical transitions", Applied physics A materials science & processing, Springer Berlin Heidelberg, Berlin/Heidelberg, vol. A77, no. 7, 1 August 2003 (2003-08-01), pages 859-860, Berlin/Heidelberg ISSN: 0947-8396, DOI: 10.1007/s00339-003-2292-4
- STEFAN W HELL: "Toward fluorescence nanoscopy", Nature Biotechnology, Gale Group Inc., New York, us, vol. 21, no. 11, 31 October 2003 (2003-10-31), pages 1347-1355, us ISSN: 1087-0156, DOI: 10.1038/nbt895
- Volker Westphal et al: "Stimulated emission depletion microscopy on lithographic nanostructures; Stimulated emission depletion microscopy on lithographic nanostructures", JOURNAL OF PHYSICS B, ATOMIC MOLECULAR AND OPTICAL PHYSICS, INSTITUTE OF PHYSICS PUBLISHING, BRISTOL, GB, vol. 38, no. 9, 14 May 2005 (2005-05-14), pages S695-S705, GB ISSN: 0953-4075, DOI: 10.1088/0953-4075/38/9/017
- ANDO R. ET AL: "Regulated Fast Nucleocytoplasmic Shuttling Observed by Reversible Protein Highlighting.", Science, American Association for the Advancement of Science, vol. 306, no. 5700, 19 November 2004 (2004-11-19), pages 1370-1373, ISSN: 0036-8075, DOI: 10.1126/science.1102506
- LUKYANOV K A ET AL: "Natural animal coloration can be determined by a nonfluorescent green fluorescent protein homolog.", Journal of Biological Chemistry, American Society for Biochemistry and Molecular Biology, US, vol. 275, no. 34, 25 August 2000 (2000-08-25), pages 25879-25882, US ISSN: 0021-9258, DOI: 10.1074/jbc.C000338200
- HABUCHI SATOSHI ET AL: "Reversible single-molecule photoswitching in the GFP-like fluorescent protein Dronpa", Proceedings of the National Academy of Sciences (PNAS), National Academy of Sciences, US, vol. 102, no. 27, 1 July 2005 (2005-07-01) , pages 9511-9516, US ISSN: 0027-8424, DOI: 10.1073/pnas.0500489102
- M. Sauer: "Reversible molecular photoswitches: A key technology for nanoscience and fluorescence imaging", Proceedings of the National Academy of Sciences (PNAS), National Academy of Sciences, US, vol. 102, no. 27, 5 July 2005 (2005-07-05) , pages 9433-9434, US ISSN: 0027-8424, DOI: 10.1073/pnas.0504264102

## Beschreibung

Die Erfindung bezieht sich auf ein auflösungsgesteigertes Lumineszenz-Mikroskopieverfahren, bei dem eine Probe durch Einstrahlung von Anregungsstrahlung mit einer Anregungsstrahlungsverteilung zur Emission von bestimmter Lumineszenzstrahlung angeregt wird und ein Bild der lumineszierenden Probe gewonnen wird, wobei die luminesziereride Probe aus einem ersten Lumineszenz-Zustand in einen zweiten Lumineszenz-Zustand überführbar ist, in dem die Probe gegenüber dem ersten Zustand verminderte Anregbarkeit zur Emission der bestimmten Lumineszenzstrahlung aufweist, und das Bild der lumineszierenden Probe eine gegenüber der Anregungsstrahlungsverteilung gesteigerte Ortsauflösung hat.

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird, wie erwähnt, mit Anregungsstrahlung beleuchtet und das dadurch angeregte Lumineszenzlicht mit geeigneten Detektoren erfaßt. Üblicherweise ist dazu im Lichtmikroskop ein dichroitischer Strahlteiler in Kombination mit Blockfiltern vorgesehen, die die Fluoreszenzstrahlung von der Anregungsstrahlung abspalten und eine getrennte Beobachtung ermöglichen. Durch dieses Vorgehen ist die Darstellung einzelner, verschieden gefärbter Zellteile im Lichtmikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Farbstoffzugabe lumineszieren.

Lumineszenz wird hier, wie allgemein üblich, als Oberbegriff für Phosphoreszenz und Fluoreszenz verstanden, erfaßt also beide Prozesse.

Weiter ist es zur Probenuntersuchung bekannt, Laser-Scanning-Mikroskope (auch LSM abgekürzt) zu verwenden, die aus einem dreidimensional ausgeleuchteten Bild mittels einer konfokalen Detektionsanordnung (dann spricht man von einem konfokalen LSM) oder einer nichtlinearen Probenwechselwirkung (sogenannte Multiphotonenmikroskopie) nur diejenige Ebene wiedergeben, die sich in der Fokusebene des Objektives befindet. Es wird ein optischer Schnitt gewonnen, und die Aufzeichnung mehrerer optischer Schnitte in verschiedenen Tiefen der Probe erlaubt es anschließend, mit Hilfe eines geeigneten Datenverarbeitungsgerätes ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet.

Natürlich wird auch eine Kombination von Lumineszenzmikroskopie und Laser-Scanning-Mikroskopie verwendet, bei der eine lumineszierende Probe in verschiedenen Tiefenebenen mit Hilfe eines LSM abgebildet wird.

Prinzipiell ist die optische Auflösung eines Lichtmikroskopes, auch eines LSM, durch die physikalischen Gesetze beugungsbegrenzt. Zur optimalen Auflösung innerhalb dieser Grenzen sind spezielle Beleuchtungskonfigurationen bekannt, wie beispielsweise 4Pi-Anordnung oder Anordnungen mit Stehwellenfeldern. Damit kann die Auflösung, insbesondere in axialer Richtung gegenüber einem klassischen LSM deutlich verbessert werden. Mit Hilfe nicht-linearer Entvölkerungsprozesse kann weiter die Auflösung auf einen Faktor von bis zu 10 gegenüber einem beugungsbegrenzten konfokalen LSM angehoben werden.

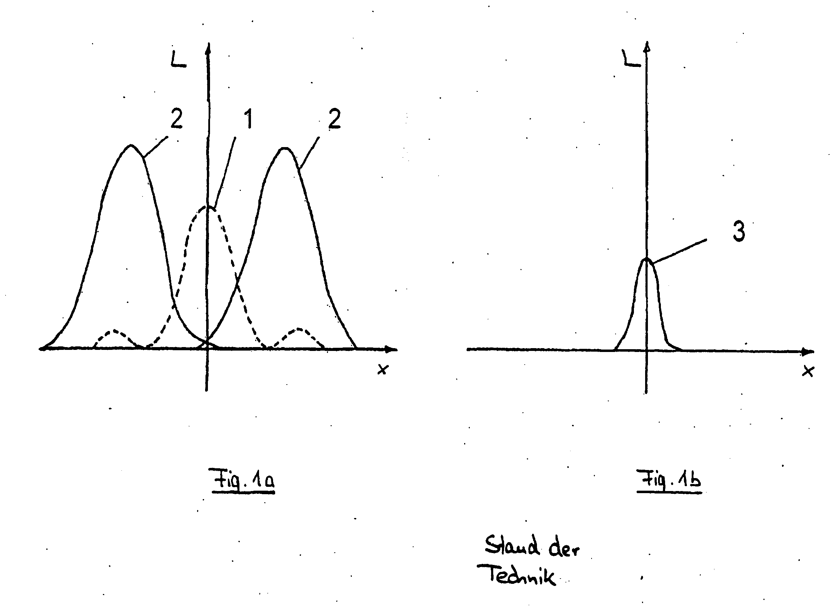

Die Fig. 1a/b zeigen ein solches Verfahren, wie es z.B. in US 5866911 beschrieben ist. Dabei wird zur Auflösungssteigerung mit einer zwei Wellenlängen aufweisenden Lichtstrahlung gearbeitet. Die Lichtstrahlung der einen Wellenlänge wird als Anregungslichtstrahl 1 auf die zu messende Probe mittels eines Objektives fokussiert und regt dort Lumineszenz, hier Fluoreszenz, an. Die Darstellung in den Fig. 1a/b zeigt zur Vereinfachung nur den eindimensionalen Fall. Die Erhöhung der Ortsauflösung erfolgt nun dadurch, daß ein Lichtstrahl 2 mit der anderen Wellenlänge in Teilbereichen den durch den Anregungslichtstrahl angeregten fluoreszierenden Zustand entvölkert. Man bezeichnet diesen Lichtstrahl deshalb auch als "Entvölkerungs-Strahlung". Nun erfolgt die Einstrahlung z.B. so, daß sich das Hauptmaximum des Entvölkerungs-Lichtstrahls 2 und das Hauptmaximum des Anregungslichtstrahls 1 teilweise überdecken, wie es in Fig. 1a gut zu erkennen ist. Durch diese "Abregung" der Probe an den Rändern des mit Anregungsstrahlung 1 beleuchteten Bereiches, sendet nur noch ein reduziertes Volumen 3 Fluoreszenz aus, wie in Fig. 1b gut zu sehen ist. Die Auflösung ist durch diese Volumenreduktion folglich gesteigert. Ein ähnliches Verfahren wird auch in den Druckschriften US 2001/0045523 A1, DE 101 05 391 A1 und US 6667830 B1 beschrieben.

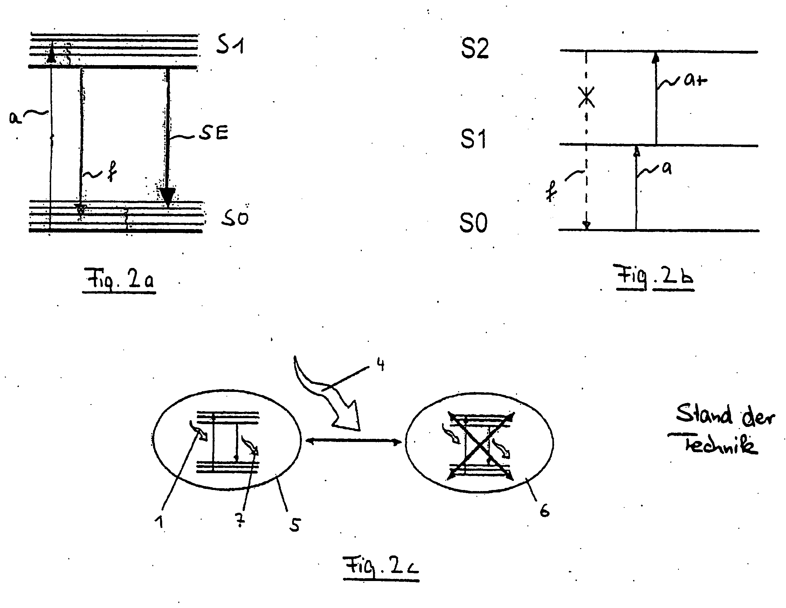

Fig. 2a-c zeigen drei mögliche Mechanismen, mit denen eine solche Entvölkerung erfolgen kann. In Fig. 2a ist der Prozeß der Abregung durch stimulierte Emission (STED) dargestellt. Die Anregungsstrahlung liegt im Fluorophor des Niveaus S1 an (Pfeil A). Die Entvölkerung des derart angeregten Niveaus S1 wird in Richtung des Grundniveaus S0 durch Lichtstrahlung mit einer Wellenlänge im Bereich der Fluoreszenzwellenlänge bewerkstelligt. Pfeil SE zeigt diese stimulierte Emission, deren Wellenlänge der der Lumineszenz (Pfeil F) fast identisch entspricht. Somit ist die Anregungswellenlänge um den Betrag des Stokesshiftes kurzwelliger als die der Entvölkerungs-Strahlung. Die Auflösungssteigerung gemäß dieses Ansatzes benötigt also zwei unterschiedliche Lichtquellen, wie auch der Stand der Technik in Form der DE 4416558 C2 belegt.

Fig. 2b veranschaulicht einen weiteren möglichen Prozeß der Entvölkerung für das angeregte Niveau S1 (Pfeil A), indem eine Anregung in ein noch höheres Niveau S2 (Pfeil A+) erfolgt, das keine Lumineszenz mehr aussenden kann. Dieses Anheben wird im Englischen als Excited State Absorption bezeichnet, weshalb dieses Vorgehen auch mit dem Kürzel ESA belegt ist. Eine entsprechende Schilderung dieses Prozesses findet sich beispielsweise in der US 6633432. Da der Abstand der Energieniveaus in einer Probe bzw. einem Farbstoff zu höheren Niveaus hin abnimmt, verwendet man zur Entvölkerung bei dem ESA-Prozeß eine Lichtquelle mit einer geringeren Energie und damit längeren Wellenlänge, als zur Anregung. Man braucht also wiederum zwei verschiedene Lichtquellen.

Ein weiteres Verfahren zur Entvölkerung stellt für die Fluoreszenz die sogenannte Reversible Saturable Optical Fluorescence Transition dar, die z.B. in DE 10325460 A1 beschrieben und in Fig. 2c veranschaulicht ist. Dieser Ansatz verwendet zum räumlich hochauflösenden Abbilden einen Farbstoff, der mit Hilfe eines Umschaltstrahls 4 wiederholt aus einem ersten Zustand 5, in dem Fluoreszenz stattfindet, in einen zweiten Zustand 6, in dem der Farbstoff nicht fluoresziert, überführbar ist, wobei der Farbstoff aus dem zweiten Zustand 6 in den ersten Zustand 5 zurückkehren kann, wie Fig. 2c veranschaulicht. Die Probe mit dem Farbstoff wird in Teilbereichen mit dem Umschaltstrahl 4 in den zweiten Zustand 6 überführt, wobei ein definierter Bereich der Probe ausgelassen wird. Mit einem Anregungsstrahl 1 wird dann Fluoreszenzlicht 7 angeregt und anschließend registriert. Das Fluoreszenzlicht 7 stammt dann nur aus Probenvolumina, die zuvor nicht mit dem Umschaltstrahl 7 beaufschlagt wurden. Durch geeignete Überlappung von Anregungsstrahl 1 und Umschaltstrahl 4 ist das Volumen, aus dem Fluoreszenzlicht 7 emittiert wird, kleiner, als es die Auflösung des Anregungsstrahls 1 und die Schärfe der Nullstelle des Umschaltstrahls 4 a priori erlaubten.

In allen drei genannten Verfahren gemäß Fig. 2a bis 2c erfolgt also die Verhinderung von Fluoreszenz durch den Einsatz von Lichtstrahlung mit einer Wellenlänge, die ungleich der Wellenlänge zur Anregung ist. Zugleich muß diese Lichtstrahlung mindestens eine scharf begrenzte örtliche Nullstelle der Strahlungsleistung aufweisen, die die endgültige Auflösung der detektierten Fluoreszenzstrahlung bestimmt. Sobald die Nullstelle nur mehr als Minimum ausgebildet ist und nicht völlig auf Null zurückgeht, verringert sich weiter die Fluoreszenzleistung und damit die Effizienz des Verfahrens. Dies liegt z.B. bei Aberrationen der optischen Anordnung bzw. im Präparat vor.

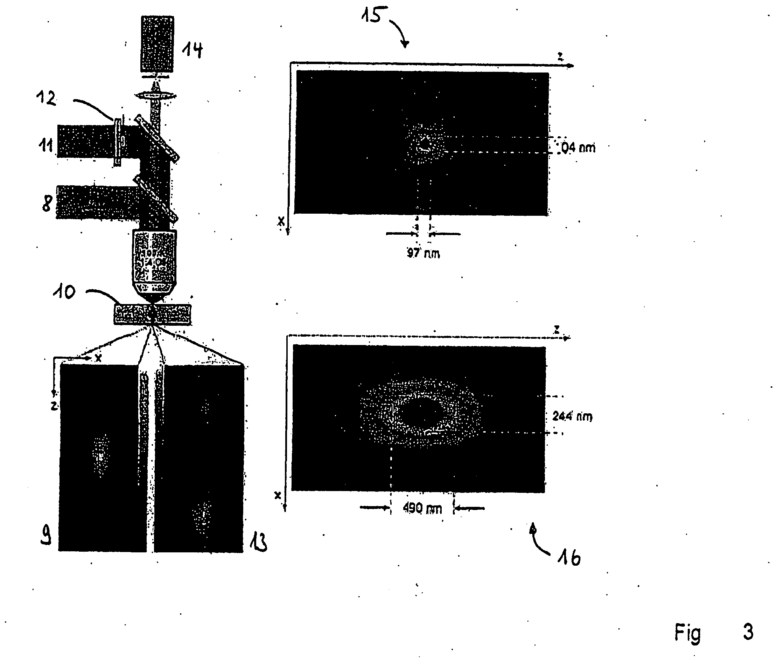

Fig. 3 zeigt eine bekannte Vorrichtung, die eines der drei genannten Verfahren zur Auflösungssteigerung verwendet, im Beispiel der Fig. 3 den STED-Prozeß. Eine Anregungsstrahlquelle 8 erzeugt eine Airy-Verteilung in der Probe 10, mit der die Probe aus dem Grundniveau S0 in den angeregten Zustand S1 überführt wird. Die Entvölkerung des Zustands S1 erfolgt mittels einer Entvölkerungslichtquelle 11, die unter die Verwendung einer Phasenplatte 12 eine donut- oder torus-förmigen Strahlverteilung 13 in der Probe 10 hat. Die Lumineszenzstrahlung der nicht-entvölkerten d.h. nicht-abgeregten Farbstoffmoleküle wird mit Hilfe eines Detektors 14 erfaßt. Durch die Entvölkerung wird die Auflösung des Mikroskops über die Beugungsbegrenzung, die sich aus der Airy-Verteilung ergibt, hinaus gesteigert. Dies kommt durch eine verkleinerte Punktverwaschungsverteilung 15 des hochauflösenden Mikroskops im Vergleich zum konventionellen Mikroskop 16 zum Ausdruck.

Ein weiteres Verfahren zur Auflösungssteigerung wird in der EP 1157297 B1 angesprochen. Dabei sollen mittels strukturierter Beleuchtung nichtlineare Prozesse ausgenützt werden. Als Nichtlinearität erwähnt die Druckschrift dabei die Sättigung der Fluoreszenz. Das geschilderte Verfahren nimmt in Anspruch, durch eine strukturierte Beleuchtung eine Verschiebung des Objektraumspektrums relativ zur Übertragungsfunktion des optischen Systems zu realisieren. Konkret bedeutet die Verschiebung des Spektrums, daß Objektraumfrequenzen V0 bei einer Raumfrequenz V0 - Vm, wobei Vm die Frequenz der strukturierten Beleuchtung ist, übertragen werden. Bei gegebener durch das System maximal übertragbarer Raumfrequenz ermöglicht dies den Transfer von um die Verschiebefrequenz Vm über der maximalen Frequenz der Übertragungsfunktion liegender Raumfrequenzen des Objektes. Dieser Ansatz erfordert einen Rekonstruktionsalgorithmus zur Bilderzeugung und die Verwertung mehrerer Aufnahmen für ein Bild.

Der Erfindung liegt deshalb zum einen die Aufgabe zugrunde, ein Lumineszenzmikroskopieverfahren bzw. ein Lumineszenzmikroskop anzugeben, das eine Auflösungssteigerung ohne Rückgriff auf mehrere Wellenlängen bzw. ohne aufwendige Bildrekonstruktionsalgorithmen erreicht.

Für Laser-Scanning-Mikroskope, die, wie beispielsweise in der DE 19702753A1 beschrieben ist, eine Probe durch Abrastern einer konfokalen Abbildung erfassen, ist die Untersuchung biologischer Präparate mittels Fluoreszenzmikroskopie deshalb eine verbreitete Anwendung. Dabei wird in einer Probe Fluoreszenz angeregt, wodurch gegenüber der Anregungsstrahlung spektral Stokes-verschobene Fluoreszenzstrahlung entsteht, die dann mit dem Laser-Scanning-Mikroskop konfokal detektiert wird. Anstelle einer konfokalen Detektion kann auch eine Weitfelddetektion erfolgen, beispielsweise im Falle einer Multi-Photonen-Anregung.

Grundsätzlich stellt sich bei einem Laser-Scanning-Mikroskop die Aufgabe, daß die Beleuchtungsstrahlung, die im erwähnten Fall der Fluoreszenzmikroskopie Anregungsstrahlung ist, von der zu detektierenden Strahlung getrennt werden muß, da zumeist die Beleuchtungsstrahlung und die Detektionsstrahlung über ein gemeinsames Objektiv geführt werden, d.h. die Beleuchtungsstrahlung fällt über das Objektiv ein, mit dem auch die Detektionsstrahlung zum Detektor geleitet wird. Es ist deshalb üblich, die Beleuchtungsstrahlung über einen Strahlteiler einzukoppeln, der dafür sorgt, daß an der Probe rückreflektierte Beleuchtungsstrahlung nicht oder zu einem möglichst geringen Anteil zum Detektor passiert.

In der Fluoreszenzmikroskopie macht man sich die Stokes-bedingte Wellenlängenverschiebung zwischen Detektions- und Anregungsstrahlung zunutze und verwendet für den Strahlteiler geeignete dichroitische Elemente, weshalb sich für den Strahlteiler auch der Begriff Farbteiler oder Hauptfarbteiler eingebürgert hat. Unterscheiden sich Beleuchtungs- und Detektionsstrahlung jedoch spektral nicht, hilft dieser Ansatz nicht weiter. Auch ist die Trennschärfe eines dichroitischen Strahlteilers begrenzt, was entweder dazu führt, daß im Detektionsstrahlengang nach dem Strahlteiler immer noch an der Probe rückreflektierte Anregungsstrahlung verbleibt oder daß die Detektionsstrahlung beim Durchgang durch den Strahlteiler unnötig abgeschwächt wird.

Einen spektral unabhängigen Ansatz stellt die DE 10257237A1 vor. Das dort beschriebene Laser-Scanning-Mikroskop der eingangs genannten Art verwendet die Tatsache, daß von der Probe kommende Strahlung in der Regel inkohärent, d.h. nicht gerichtet an der Probe emittiert wird, wohingegen spiegelnd reflektierte Anregungs- oder Beleuchtungsstrahlung gerichtet in den Detektionsstrahlengang einkoppelt. Die DE 10257237A1 schlägt deshalb vor, in eine Pupille des Beleuchtungsstrahlengangs einen Strahlteiler einzufügen, der am Durchstoßpunkt der optischen Achse transparent und ansonsten verspiegelt ist. Zugleich wird die Beleuchtungsstrahlung genau auf diesen transparenten Fleck fokussiert. Im Ergebnis erhält man damit eine flächige Beleuchtung der Probe und zugleich gelangt an der Probe spiegelnd reflektierte Beleuchtungsstrahlung wieder auf die Spiegelfläche des Strahlteilers und wird dadurch aus dem nachfolgenden Teil des Detektionsstrahlengangs aufgespiegelt. Die diffus in der Probe erzeugte Detektionsstrahlung hingegen wird nicht fokussiert, füllt die ganze Pupille und wird fast vollständig transmittiert. Der als Auskoppelgrad der Beleuchtungsstrahlung zu verstehende Wirkungsgrad dieses Strahlteilers ist also nur durch das Flächenverhältnis von Pupille zu transparentem Fleck gegeben. Er kann bei geeigneter Fokussierung der Beleuchtungsstrahlung weit über 90% liegen. Der derart durch die DE 10257237A1 erreichte Strahlteiler ist spektral unempfindlich und erlaubt eine hohe Ausbeute der Detektionsstrahlung.

Die Laser-Scanning-Mikroskopie eignet sich, wie bereits erwähnt, besonders zur Untersuchung biologischer Proben. Die Zeitdauer, die für die Aufnahme eines Bildes benötigt wird, ist bei biologischen Proben naturgemäß ein bedeutender Faktor, insbesondere wenn man lebende Proben untersuchen oder schnell ablaufende Vorgänge analysieren möchte. Es ist deshalb stetes Bestreben in der Laser-Scanning-Mikroskopie, die Bildaufnahmegeschwindigkeit zu steigern. Hierzu sind in letzter Zeit vermehrt Mikroskopsysteme beschrieben worden, die eine Probe nicht mit einem punkt-artigen Lichtfleck (d.h. mit nicht einem konfokalen Punkt-Scanner) abtasten, sondern mit einer zeilenförmigen Beleuchtung und Abtastung (d.h. eine konfokale Schlitzblende) verwenden. Auch hierfür stellt die DE 10257237A1 einen geeigneten Strahlteiler bereit, bei dem dann ein zeilenförmiger Bereich in Form eines schmalen Rechteckes auf dem Strahlteiler verspiegelt ist.

Zwar erreichen zeilen-scannende Systeme eine hohe Bildaufnahmegeschwindigkeit, jedoch ist die Tiefenschärfeauflösung gegenüber einem punkt-scannenden System vermindert, da es in der konfokalen Abbildung mit der Schlitzblende prinzipbedingt zu einem gewissen Übersprechen längs der Schlitzblendenrichtung kommt.

Der Erfindung liegt deshalb zum anderen die Aufgabe zugrunde ein Laser-Scanning-Mikroskop der eingangs genannten Art so weiterzubilden, daß eine schnelle Bildaufnahme möglich ist, ohne die mit einer Schlitzblende einhergehende Tiefenauflösungseinschränkung.

Die Aufgabe wird erfindungsgemäß durch ein auflösungsgesteigertes Lumineszenz-Mikroskopieverfahren, bei dem eine Probe durch Einstrahlung von Anregungsstrahlung zur Emission von bestimmter Lumineszenzstrahlung angeregt wird und ein Bild der lumineszierenden Probe gewonnen wird, wobei die lumineszierende Probe aus einem ersten Lumineszenz-Zustand, in dem die Anregbarkeit zur Emission der bestimmten Lumineszenzstrahlung mit steigender Anregungsstrahlungsleistung bis zu einem Maximalwert, welcher einem Anregungsstrahlungsleistungs-Schwellwert zugeordnet ist, steigt, in einen zweiten Lumineszenz-Zustand überführbar ist, in dem die Probe gegenüber dem ersten Zustand verminderte Anregbarkeit zur Emission der bestimmten Lumineszenzstrahlung aufweist, wobei die Probe durch Einstrahlung von Anregungsstrahlungsleistung oberhalb des Schwellwertes in den zweiten Zustand bringbar ist, die Probe in Teil-Bereichen in den ersten Zustand und in angrenzenden Teil-Bereichen in den zweiten Zustand versetzt wird, indem die Einstrahlung von Anregungsstrahlung mit einer Anregungsstrahlungsverteilung erfolgt, die zumindest ein örtliches Leistungsmaximum über dem Schwellwert und zumindest ein örtliches, lokales Leistungsminimum unter dem Schwellwert aufweist, das Bild der lumineszierenden Probe Proben-Bereiche im ersten Zustand und Proben-Bereiche im zweiten Zustand umfaßt, wobei zum Bild der lumineszierenden Probe überwiegend Proben-Bereiche im ersten Zustand beitragen und dadurch das Bild eine gegenüber der Anregungsstrahlungs-verteilung gesteigerte Ortsauflösung hat.

Es wird also eine Probe verwendet bzw. das Mikroskop ist für eine entsprechende Probe ausgelegt, deren lumineszierendes Material sich im wesentlichen in zwei Zuständen befinden kann. In einem ersten Zustand, der sich bei der Einstrahlung von Anregungsstrahlungsleistung unterhalb des Schwellwertes einstellt und der mittels der Mittel zur Anregung erreicht wird, strahlt das Material Lumineszenzstrahlung ab, deren Leistung in der Regel mit der Anregungsstrahlungsleistung zunimmt. In einem zweiten Zustand, der bei Einstrahlung von Anregungsstrahlungsleistung oberhalb des Schwellwertes vorliegt, erfolgt entweder gar keine oder verminderte Lumineszenz. Auch können gegenüber dem ersten Zustand geänderte Absorptionseigenschaften und/oder Lumineszenzstrahlungsemission mit anderen optischen Eigenschaften als im ersten Zustand, beispielsweise mit anderer spektraler Zusammensetzung, Polarisation oder Lebensdauer, erfolgen. Bezogen auf die Probe, die sich natürlich aus einer Vielzahl von fluoreszierenden oder auto-fluoreszierenden Molekülen zusammensetzt, ergeben sich zwei Zustandsregionen. In einer ersten Zustandsregion ist die Mehrzahl der Moleküle im ersten Zustand, in einer zweiten Zustandsregion ist die Mehrzahl im zweiten Zustand. Erfindungsgemäß werden nun Proben-Bereiche in die erste Zustandsregion (oder kurz Zustand) und andere Proben-Bereiche in die zweite Zustandsregion (oder kurz Zustand) verbracht. Die örtliche Nähe der Bereiche, die in den ersten Zustand gebracht wurden, also auf die Anregungsstrahlungsleistung unterhalb des Schwellwertes fällt, und Bereichen im zweiten Zustand, d.h. Bereiche, die mit Anregungsstrahlungsleistung oberhalb des Schwellwertes bestrahlt werden, erlaubt eine signifikante Steigerung der Auflösung gegenüber der Anregungsstrahlungsverteilung.

Die erfindungsgemäße Lösung erreicht also die Auflösungssteigerung durch eine nichtlineare Lumineszenzkennlinie, die die emittierte Lumineszenzleistung als Funktion der Anregungsstrahlungsleistung beschreibt und ein lokales Maximum hat. Es ist dabei vorteilhaft, aber nicht zwingend erforderlich, wenn die Kennlinie beiderseits dieses Maximums relativ steile Flanken aufweist. Auch kann zur Anregung ein Multiphotonenprozeß zum Einsatz kommen.

Da beim erfindungsgemäßen Ansatz möglichst ausschließlich Proben-Bereiche im ersten Zustand zum Bild Lumineszenzstrahlung beitragen und Proben-Bereiche im zweiten Zustand zumindest in einem geringeren Maße lumineszieren, ist eine Auflösungssteigerung erreicht, da das Probenbild eine über die Anregungsstrahlungsverteilung hinausgehende Struktur zeigt. Diese Intensitätsstruktur ist um so ausgeprägter, je deutlicher die Emissionsleistung sich zwischen erstem und zweitem Zustand unterscheidet.

Durch Einstrahlung der Anregungsleistung oberhalb des Schwellwertes, der dem Maximum der Fluoreszenzkennlinie entspricht, wird weniger Fluoreszenz angeregt als im ersten Zustand. Im Mikroskop ist dazu die Anregungsstrahlungsverteilung mit Leistungen über dem Schwellwert versehen. Strahlung anderer Wellenlänge, wie sie im Stand der Technik bislang erforderlich war, ist nicht mehr nötig. Das erfindungsgemäße Mikroskop bzw. eine Vorrichtung zur Ausführung des erfindungsgemäßen Verfahrens sind deshalb sehr viel einfacher, benötigen insbesondere nur eine einzige Lichtquelle, deren Auflösung sich auf die Bildqualität auswirkt. Auch sind die chromatischen Anforderungen hinsichtlich der Einkopplung der Anregungsstrahlung gegenüber dem Stand der Technik deutlich vereinfacht, da nicht mehr ein relativ breiter Wellenlängenbereich abgedeckt werden muß.

Das Mikroskop ist auf die Probe abgestimmt, da die eingestrahlte Anregungsstrahlungsverteilung den Schwellwert für die Leitung berücksichtigt.

Für den erfindungsgemäßen Ansatz ist es darüber hinaus nicht zwingend erforderlich, daß die Probenbereiche, die mit Anregungsstrahlungsleistung oberhalb des Schwellwertes beleuchtet werden, zuvor "normal" angeregt wurden (wie dies beispielsweise beim STED- oder beim ESA-Ansatz erforderlich ist), wenn eine Probe verwendet wird, die nach Bestrahlung mit über dem Schwellwert liegender Anregungsstrahlungsleistung dauerhaft oder zumindest für eine gewisse Zeitdauer eine deutlich herabgesetzte oder gar verschwindende Anregbarkeit zeigt.

Es ist bevorzugt, daß eine Probe bzw. ein Farbstoff verwendet wird, die/der bei einer Anregungsstrahlungsleistung über dem Schwellwert nicht luminesziert, Lumineszenzstrahlung mit anderen Eigenschaften als die bestimmte Lumineszenzstrahlung abstrahlt und/oder geänderte, zu verminderter Lumineszenz führende Absorptionseigenschaften für Anregungsstrahlung aufweist.

Die Auflösungssteigerung wird also erfindungsgemäß dadurch erreicht, daß aus Proben-Bereichen, die mit über dem Schwellwert liegender Anregungsstrahlungsintensität beleuchtet werden, keine oder nur mehr wenig Lumineszenzstrahlung zur Bilderzeugung beiträgt. Je nach Lumineszenzeigenschaft, die die Probe im zweiten Zustand, d.h. bei und/oder nach oberhalb dem Schwellwert liegender Anregungsstrahlungsleistung zeigt, erfolgt dieser verminderte Beitrag zum Bild auf unterschiedliche Weise. Zeigt die Probe überhaupt keine Lumineszenz mehr, wird aus Proben-Bereichen, die im zweiten Zustand sind, auch keine Lumineszenzstrahlung mehr detektiert. Zeigt die Probe im zweiten Zustand hingegen Lumineszenzstrahlung mit geänderten optischen Eigenschaften, wird man eine entsprechend optische Filterung, beispielsweise hinsichtlich spektraler Zusammensetzung oder Polarisation zum Ausblenden vornehmen. Zeigen sich veränderte Lebensdauern der angeregten Lumineszenzzustände, erreicht eine zeitliche Filterung eine Ausblendung.

Um die Proben-Bereichen im ersten Zustand weiter einzugrenzen bzw. einige dieser Proben-Bereiche auszuwählen, ist es bevorzugt eine konfokale Detektion vorzunehmen. Durch die erfindungsgemäße Reduktion des zur Lumineszenz angeregten Volumens unterhalb der Beugungsgrenze wird dabei eine Ortsauflösung erreicht, die diejenige bei normaler konfokaler Detektion übertrifft.

Wesentlich ist, daß nicht alle mit Anregungsstrahlung beleuchteten Bereiche zum Lumineszenzbild beitragen, sondern daß mit über dem Schwellwert liegender Anregungsstrahlungsleistung beleuchtete Proben-Bereiche im Bild nicht oder nur vermindert enthalten sind, wodurch sich automatisch die Auflösungssteigerung gegenüber der Einstrahlung der Anregungsstrahlung ergibt, da eine räumliche Reduktion des lumineszierenden Probenvolumens gegenüber dem angeregten Probenvolumen erreicht ist. Es finden sich im Bild optische Strukturen, die in der Anregungsstrahlungsverteilung nicht vorhanden waren. Die Auflösung des Bildes ist also über die Auflösung der Anregungsstrahlungseinkopplung hinaus gesteigert.

In besonders vorteilhafter Weise verwendet man eine Probe bzw. Farbstoffe bzw. stimmt das Mikroskop darauf ab, die vom zweiten Zustand durch Einstrahlung einer Rücksetzstrahlung, die andere optische Eigenschaften als die Anregungsstrahlung hat, wieder in den (ursprünglichen) ersten Zustand zurückgesetzt werden können. Das Mikroskop weist dazu geeignete Mittel auf. Dies bedeutet, daß der zweite Zustand ein zumindest weitgehend reversibler Zustand ist. Durch Einstrahlung von Anregungsstrahlungsleistung oberhalb des Schwellwertes aus dem Lumineszenzbild ausgeblendete Bereiche können dann nach Einstrahlung der Rücksetzstrahlung wieder zur normalen Lumineszenz im ersten Zustand angeregt werden. Ein derart weitergebildetes Verfahren eignet sich dann für Anwendungen, bei denen verschiedene Bereiche einer Probe mehrfach abgebildet werden sollen. Es wird für solche Anwendungen deshalb bevorzugt, daß eine Probe bzw. ein Farbstoff verwendet wird, die bzw. der im zweiten Zustand, also nach Beleuchtung mit Anregungsstrahlung über dem Schwellwert, verminderte Empfindlichkeit für Anregungsstrahlung zeigt, wobei durch Einstrahlung einer Rücksetzstrahlung, die andere optische Eigenschaften als die Anregungsstrahlung hat, die Empfindlichkeitsverminderung zumindest teilweise reversiert wird (und der erste Zustand wiederhergestellt wird). Zumindest die mit über dem Schwellwert liegender Anregungsstrahlungsleistung beleuchteten Proben-Bereiche werden mit Rücksetzstrahlung bestrahlt. Es ist dabei bedeutsam, daß die Rücksetzstrahlung, die die Probe wieder in den ersten Zustand überführt, zur Bewerkstellung der Auflösungssteigerung nichts beiträgt, also auch nur sehr grob oder überhaupt nicht strukturiert in die Probe eingekoppelt werden kann.

In einer besonders vorteilhaften Weiterbildung der Erfindung erlaubt die hinsichtlich ihrer Lumineszenzeigenschaften wieder in den ersten Zustand rückführbare Probe eine Bilderzeugung durch Abscannen. Dabei kann die Probe beispielsweise mit einem Spot-, Zeilen- oder Multispotbereich abgerastert werden, z.B. durch eine Scannereinrichtung. Zwischen zwei Scanschritten wird dann jeweils Rücksetzstrahlung eingestrahlt, um beim neuen Scanschritt jeweils erneut Anregungsstrahlung unter und über dem Schwellwert einstrahlen zu können. Dadurch wird in jedem Scanschritt eine gesteigerte Auflösung erzielt, was insgesamt ein deutlich auflösungsverbessertes Bild liefert.

Die Einstrahlung der Anregungsstrahlungsverteilung erzeugt also eine örtliche Struktur der Fluoreszenzstrahlung. Diese ist meist symmetrisch bezüglich der Anregungsstrahlungsverteilung. Möchte man eine bestimmte fluoreszierende Flächenform, z.B. einen Punkt, so werden vorteilhafterweise Teile der fluoreszierenden Probe ausgeblendet. Dies ist ohne Auswirkung auf die Auflösung der erwünschten Flächenform möglich, da man für ausreichende Abstände zwischen benachbarten fluoreszierenden Bereichen sorgen kann.

Für die Anregung der Probe über bzw. unter dem Schwellwert sind prinzipiell zwei Varianten möglich. In einer ersten Variante erfolgt eine prinzipiell beugungsbegrenzte Beleuchtung, wobei diese punktförmig sein kann, radial symmetrisch sein kann oder ein zentrales Maximum, wie die bekannte Airy-Funktion aufweisen kann, jedoch nicht muß. In dieser Form der Anregungsverteilung ist es bevorzugt, daß die Anregungsstrahlungsverteilung beugungsbegrenzt ist.

Bei der beugungsbegrenzten Anregungsstrahlungsverteilung kann man besonders vorteilhaft eine torusförmige Verteilung verwenden, die im Kernbereich der torusförmigen Verteilung eine Anregungsstrahlungsleistung über dem Schwellwert, in Randbereichen unter dem Schwellwert hat. Im vom Torus umschriebenen Zentrum erhält man dann eine punktförmige Lumineszenzverteilung, die deutlich kleiner ist, als es ein beugungsbegrenztes Airy-Scheibchen wäre. Da natürlich aus den erwähnten Symmetriegründen auch am Außenrand des Torus liegende Proben-Bereiche mit unter dem Schwellwert liegender Anregungsstrahlungsleistung beleuchtet werden, wird auch dort Lumineszenzstrahlung angeregt. Um ein punktförmiges Fluoreszenzbild zu erzeugen, ist es zweckmäßig, diese Bereiche auszublenden, beispielsweise mit Hilfe einer konfokalen Detektion, die lediglich im vom Torus umschriebenen Zentrum entstehende Lumineszenzstrahlung passieren läßt. Das lumineszierende Zentrum ist dabei dennoch kleiner, als es die (beugungsbegrenzte) Auflösung der konfokalen Detektion per se erlaubt. Das Ausblenden kann natürlich auch anders bewerkstelligt werden. Z.B. können die Außenbereiche bezüglich der Lumineszenzanregbarkeit gezielt ausgeschaltet bzw. das umschriebene Zentrum gezielt eingeschaltet werden. Das erfindungsgemäße Verfahren bzw. Mikroskop erlaubt damit eine Auflösung über die physikalische Beugungsgrenze hinaus bei gleichzeitiger Beeinflussung der fluoreszierenden Bereichsform.

In einer zweiten Variante wird eine flächige, strukturierte Beleuchtung eingesetzt, wobei die Fläche auch als eine oder mehrere, in einer Richtung beugungsbegrenzte Linie(n) ausgebildet werden kann. Teilbereiche der beleuchteten Fläche weisen eine Anregungsstrahlungsleistung über und andere Teilbereiche eine Anregungsstrahlungsleistung unter dem Schwellwert auf. Eine solche flächige Beleuchtung erlaubt es, eine größere Probe besonders schnell abzurastern. Gleiches gilt natürlich auch für eine Multispot-Anordnung, bei der mehrere beugungsbegrenzte Beleuchtungsspots auf die Probe fallen, die so weit voneinander räumlich getrennt sind, daß sie eindeutig voneinander getrennt detektiert werden können. Als flächige strukturierte Probenbeleuchtung kommt insbesondere ein Streifen- oder Kreuzgitter in Frage.

Je nach Probe können Proben-Bereiche im zweiten Zustand noch eine gewisse Restlumineszenz zeigen. Dies kann entweder durch die Probe selbst bedingt sein, oder durch Wanderungen von lumineszierendem Material zwischen den unterschiedlich beleuchteten Proben-Bereichen, beispielsweise durch Diffusion. Die Probe selbst kann z.B. störend autofluoreszieren oder andere Farbstoffe enthalten, die nicht in einen zweiten, reversiblen Zustand überführbar sind. Im Ergebnis hat man eine Restlumineszenzstrahlung in Bereichen, die mit über dem Schwellwert liegender Anregungsstrahlungsleistung beleuchtet wurden. Prinzipiell kann diese Restlumineszenz durch einen geeigneten Schwellwert bei der Detektion unterdrückt werden.

Die Verwendung einer an und für sich bekannten Lock-In-Technik unterdrückt diese Hintergrundstrahlung bei verbessertem Bildsignal. Dazu wird man entweder in Proben-Bereiche, die in den zweiten Zustand versetzt werden oder in Proben-Bereiche, die im ersten Zustand verbleiben, die Anregungsstrahlung gemäß einer Referenzfrequenz intensitätsmodulieren und diese Referenzfrequenz bei der Detektion der Lumineszenzstrahlung im Wege der Lock-In-Technik verwerten. Das Mikroskop weist dazu einen Modulator und einen dem Lumineszenzdetektor nachgeschalteten Lock-In-Verstärker auf. Dieser separiert dann die modulierten Signale und unterdrückt die unmodulierten Signale, was eine hochaufgelöste Detektion auch bei der genannten Restlumineszenz ermöglicht, ohne daß der Spitzenpegel des Nutzsignals sinkt. Dadurch tragen die modulierten Signale voll zum hochaufgelösten Bild bei.

Eine alternative Möglichkeit zur Unterdrückung einer Restlumineszenz ist ein Differenzverfahren, bei dem zwei Bilder voneinander substrahiert werden. Ein erstes Bild wird mit Anregungsstrahlungsleistung unter dem Schwellwert, ein zweites Bild mit Anregungsstrahlungsleistung oberhalb des Schwellwertes aufgezeichnet. Die Differenz zwischen den beiden Bildern bewirkt die Abseparierung der Restlumineszenz. Andere mögliche Ansätze zur Unterdrückung der Restlumineszenz nutzen weitere Eigenschaften von in Varianten der Erfindung verwendeten Proben bzw. Farbstoffen, beispielsweise die Auswertung unterschiedlicher Lumineszenzlebensdauern im ersten bzw. zweiten Zustand, die Nutzung unterschiedlicher optischer Eigenschaften der Lumineszenzstrahlung im ersten oder zweiten Zustand o.ä.

Weiter werden in vorteilhaften Ausgestaltungen Probenteile, die außerhalb der zu detektierenden Fokusebene liegen, ausgeblendet, um die Tiefenschärfe zu steigern. Dadurch wird gleichzeitig die axiale von der lateralen Auflösung entkoppelt. Dazu wird zuerst die Probe unstrukturiert in den zweiten Zustand überführt und dann nur in der Fokusebene rückgesetzt. Gleiches erreicht eine entsprechende Tiefenstrukturierung der Anregungsstrahlungsintensität, mit einem Minimum in der Fokusebene. Hierzu kann man eine Anordnung gemäß den Prinzipien der DE 102 57 423 A1 geeignet abwandeln.

Da die Anregungsstrahlung sowohl zur Anregung der Lumineszenz als auch zur Verhinderung bzw. Minderung von Lumineszenz verwendet wird, ist es vorteilhafterweise möglich, eine einzige Anregungsstrahlungsquelle vorzusehen, welche die Anregungsstrahlung abgibt und der eine Einrichtung nachgeordnet ist, welche dem Strahlprofil ein Minimum, vorzugsweise mit variabler Tiefe, aufprägt, wobei im Minimum die Leistung unter dem Schwellwert liegt.

Die Erfindung wird nachfolgend unter Bezugnahme auf die Zeichnungen beispielhalber noch näher erläutert. In den Zeichnungen zeigt:
- Fig. 1a und 1b: ortsabhängige Leistungsverteilungen für Verfahren des Standes der Technik,
- Fig. 2a-2c: Schemazeichnungen für verschiedene Verfahren zur Auflösungssteigerung gemäß dem Stand der Technik,
- Fig. 3: ein auflösungsgesteigertes Fluoreszenzmikroskop nach dem Stand der Technik,
- Fig. 4: eine Fluoreszenzkennlinie einer Probe,
- Fig. 5: eine Schemazeichnung zur erfindungsgemäßen Auflösungssteigerung,
- Fig. 6a/b: ein- bzw. zweidimensionale Leistungsverteilungen, wie sie bei der Auflösungssteigerung nach einer ersten und zweiten Verfahrensform anfallen,
- Fig. 7: eine Darstellung ähnlich der Fig. 6a/b für eine dritte Verfahrensform,
- Fig. 8a/b: Darstellungen ähnlich der Fig. 6a/b für eine vierte und fünfte Verfahrensform,
- Fig. 9a/b: eine Schemazeichnung für ein erstes auflösungsgesteigertes Mikroskop,
- Fig. 10: eine Leistungsverteilung ähnlich der Fig. 6a zur Verdeutlichung der Wirkungsweise des Mikroskops der Fig. 9,
- Fig. 11a/b: eine Kennlinie ähnlich der Fig. 4 sowie eine Leistungsverteilung zur Verdeutlichung eines zweiten auflösungsgesteigerten Mikroskops,
- Fig. 12: eine Schemadarstellung des zweiten Mikroskops,
- Fig. 13: eine Schemadarstellung eines dritten auflösungsgesteigerten Mikroskops,
- Fig. 14: eine Schemadarstellung zur Funktionsweise des dritten Mikroskops,
- Fig. 15a/b: Schemadarstellungen von Teilen eines vierten Mikroskops,
- Fig. 16a: eine Verteilung der Anregungs- bzw. Rücksetzstrahlung in einer Pupille des vierten Mikroskops,
- Fig. 16b: eine mit dem vierten Mikroskop realisierte Multispotverteilung,
- Fig. 17: eine Fluoreszenzverteilung beim vierten Mikroskop,
- Fig. 18: eine Verteilung der Anregungs- bzw. Rücksetzstrahlung in einer Pupille einer Variante des vierten Mikroskops,
- Figur 19: eine Schemadarstellung eines Laser-Scanning-Mikroskops,
- Figur 20: eine alternative Ausgestaltung einer Beleuchtungsquelle für das Mikroskop der Figur 19,
- Figur 21: eine Draufsicht auf einen Strahlteiler des Mikroskops der Figur 19 und
- Figur 22: ein vom Mikroskop der Figur 19 bewirktes Beleuchtungsmuster auf der Probe.

Nachfolgend werden in verfahrenstechnischer Erläuterung sowie in Mikroskopbeschreibungen verschiedene Ausführungsformen zur auflösungsgesteigerten Lumineszenzmikroskopie dargestellt. Dies geschieht rein exemplarisch anhand verschiedener Fluoreszenzmikroskope bzw. Fluoreszenzmikroskopieverfahren. Natürlich sind die nachfolgend geschilderten Ausführungsbeispiele, d.h. Verfahrensformen und Mikroskope, auch für andersartig lumineszierende Substanzen einsetzbar, beispielsweise für phosphorisierende Proben oder Farbstoffe. Soweit nachfolgend von einem Farbstoff gesprochen wird, so ist auch dies nur beispielshalber aufzufassen. Anstelle eines Farbstoffes, der zur Präparation einer Probe eingesetzt werden kann, kann natürlich auch eine direkt fluoreszierende (oder phosphorisierende) Substanz als Probe treten, wodurch eine Farbstoffzugabe entbehrlich ist. Auch können zusätzliche Farbstoffe verwendet werden, die andere Eigenschaften zeigen und nicht in einen zweiten Zustand bringbar sind. Weiter können für einzelne Verfahrensformen oder Mikroskope geschilderte Merkmale auch für andere beschriebene Verfahrensformen oder Mikroskope eingesetzt werden, so daß auch hier nicht geschilderte Kombinationen möglich sind.

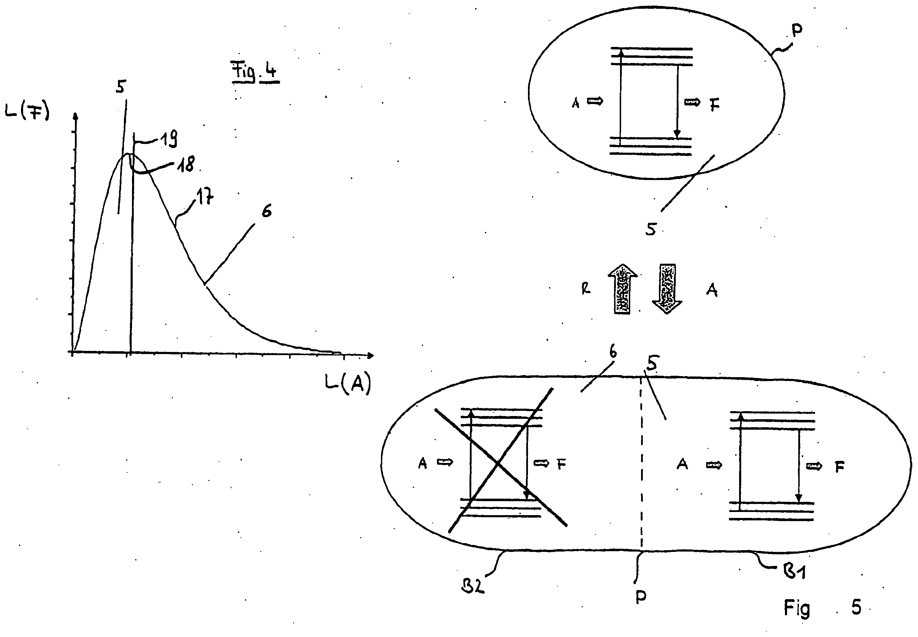

Fig. 4 zeigt beispielshalber eine Fluoreszenz-Kennlinie 17 für einen Farbstoff, der erfindungsgemäß verwendet wird. Diese Fluoreszenz-Kennlinie 17 gibt die Leistung L der abgegebenen Fluoreszenzstrahlung F als Funktion der Leistung L der Anregungsstrahlung A wieder. Wie zu sehen ist, steigt die Kennlinie 17 weitgehend linear, jedenfalls monoton, bis zu einem Maximum 18 und fällt dann oberhalb eines Schwellwerts 19 für die Anregungsstrahlungsleistung wieder ab. Erkennbar sind zwei Zustands-Regionen, die jeweils links und rechts vom Schwellwert 19 bzw. dem Maximum 18 liegen. Wird eine Anregungsstrahlungsleistung unterhalb des Schwellwerts 19 eingestrahlt, befindet sich der Farbstoff vorrangig in einem ersten Zustand 5. In diesem kann er Fluoreszenzstrahlung abstrahlen. Wird die Anregungsstrahlungsleistung über den Schwellwert 19 erhöht, findet eine Umschichtung der Farbstoffmoleküle in einen zweiten Zustand 6 statt. Farbstoffmoleküle im zweiten Zustand 6 können entweder nicht fluoreszieren, strahlen eine Fluoreszenzstrahlung mit geänderten optischen Eigenschaften ab und/oder besitzen eine gegenüber dem ersten Zustand 5 geänderte Absorptionseigenschaft. Die geänderten optischen Eigenschaften für Fluoreszenzemission oder Absorption können die spektrale Zusammensetzung, die Polarisation und/oder die Lebensdauer der Fluoreszenzstrahlung betreffen. Im Ergebnis fällt in der zweiten Zustands-Region die Leistung der Fluoreszenzstrahlung F, wenn man sich auf die Art der Fluoreszenzstrahlung, die im ersten Zustand 5 abgeben wird, bezieht, wieder ab.

Die Erfindung setzt nun die Kennlinie 17 dahingehend ein, daß die Einstrahlung der Anregungsstrahlung A nur einen Teil der Probe in die erste Zustands-Region (oder kurz ersten Zustand) 5, einen anderen Teil der Probe jedoch in die zweite Zustands-Region (oder kurz zweiten Zustand) 6 bringt. Bereiche, die mit Anregungsstrahlungsleistung oberhalb des Schwellwertes 19 beleuchtet wurden/werden, emittieren somit die bestimmte Fluoreszenzstrahlung nur vermindert. Dabei ist es vorteilhaft, wenn der zweite Zustand 6 ein reversibler Zustand ist. Dies bedeutet, daß zumindest nach einer gewissen Zeit oder nach aktiver Einwirkung ein einmal mit Anregungsstrahlungsleistung oberhalb des Schwellwertes 19 bestrahlter Farbstoff wieder die Eigenschaften des ersten Zustandes 5 zeigt. Ein Beispiel für einen Farbstoff, für den die Erfinder eine Kennlinie gemäß der Fig. 4 erkannten, ist die als Dronpa bezeichnete Substanz, die in der Veröffentlichung R. Ando et al., "Regulated fast nucleocytoplasmic shuttling observed by reversible protein highlighting", Science, 19. November 2004, Vol. 306, S. 1370-1373, beschrieben ist. Der Farbstoff ist von der Firma Amalgaam, Woburn, Massachusetts, USA, unter der Bezeichnung Dronpa-Green, Code-Nr. AM-V0071, verfügbar und bislang im Zusammenhang mit der Fluoreszenzmarkierung von Molekülen, deren Transporteigenschaften durch Zellmembranen untersucht werden sollen, bekannt. Der Farbstoff Dronpa kann bei einer Wellenlänge von 488 nm angeregt werden, und nach Anregung in den zweiten Zustand 6 durch Strahlung bei einer Wellenlänge von 405 nm wieder in den ersten Zustand 5 zurückgeführt werden.

In Kombination mit einer geeigneten Anregungsstrahlungsverteilung beim Beleuchten der Probe führt die Verwendung des Farbstoffes mit der Kennlinie der Fig. 4 oder einer entsprechenden Kennlinie zu einer deutlichen Steigerung der Auflösung. Dabei wird im Gegensatz zum Stand der Technik nur Strahlung mit einer Wellenlänge eingestrahlt, und nur diese Strahlung trägt zur Auflösung bei. Das Rückschalten kann den Ausführungsformen, bei denen der Farbstoff nicht spontan in den ersten Zustand 5 zurückkehrt, durch Einstrahlung einer Rücksetzstrahlung R erreicht werden, die jedoch zur Auflösungssteigerung unbeachtlich ist.

Mit der Anregungsstrahlung A wird neben der Anregung der Farbstoffmoleküle aus dem Grundniveau heraus in das erste angeregte Niveau (erster Zustand 5) auch die Verhinderung von Fluoreszenz oder auch eine Entvölkerung (zweiter Zustand 6) bewerkstelligt. Bei der Entvölkerung erfolgt eine Umlagerung der Farbstoffmoleküle aus dem ersten Zustand in den zweiten Zustand. Die beiden Zustände haben voneinander verschiedene optische Fluoreszenzeigenschaften. Nach der Anregung mit der Anregungsstrahlung A kann sofort das hochaufgelöste Fluoreszenzbild gewonnen werden, wobei hochaufgelöst sich auf die optische Auflösung der Anregungsstrahlung A bezieht. Falls der Farbstoff aus dem zweiten Zustand nicht spontan in den ersten Zustand zurückkehrt, wird aktiv eine Rücksetzung, beispielsweise mittels einer Rücksetzstrahlung R, die von der Anregungsstrahlung A verschiedene optische Eigenschaften aufweist, bewerkstelligt. Das entsprechende Schema zeigt Fig. 5.

Ursprünglich befindet sich z.B. die zu untersuchende Probe P im ersten Zustand 5, in dem die Leistung der Fluoreszenzstrahlung F mit der Leistung der Anregungsstrahlung A steigt. Die Einstrahlung der Anregungsstrahlung A erfolgt nun so, daß in einzelnen Proben-Bereichen B2 die Anregungsstrahlungsleistung über dem Schwellwert 19 liegt. In anderen Bereichen B1 liegt sie darunter. Somit sind einige Probenbereiche im ersten Zustand 5, andere im zweiten Zustand 6, je nach dem ob die Leistung der Anregungsstrahlung über oder unter dem Schwellwert 19 liegt. Fig. 5 zeigt schematisch die Überführung der Probe durch Einstrahlung von Anregungsstrahlung A in Probenbereiche B1 im ersten Zustand 5 (rechter Teil der unteren Hälfte der Fig. 5) sowie Probenbereiche B2 im zweiten Zustand 6 (linker Teil). Probenbereiche B2 im zweiten Zustand 6 können nicht mehr effizient fluoreszieren, vor allem wenn eine Anregungsstrahlungsleistung deutlich über dem Schwellwert 19 verwendet wurde. Der Begriff "fluoreszieren" bezieht sich dabei auf Fluoreszenzstrahlung mit bestimmten Eigenschaften. Es ist also durchaus möglich, daß auch im zweiten Zustand 6 Fluoreszenzstrahlung abgegeben wird, jedoch mit anderen Eigenschaften als im ersten Zustand 5. Entweder ändern sich im zweiten Zustand also die Absorptionseigenschaften oder/und die Fluoreszenzeigenschaften der Probe.

Bereiche B1 der Probe, die im ersten Zustand 5 bleiben, emittieren nach Einstrahlung von Anregungsstrahlung A weiterhin dieselbe Fluoreszenzstrahlung F. Einstrahlung von Rücksetzstrahlung R (in Figur 5 ist dieser Vorgang durch einen entsprechenden Pfeil veranschaulicht) bringt die gesamte Probe P wieder in den ersten Zustand 5, reversiert also die Aufteilung in zwei verschieden fluoreszierende Probenbereiche B1 und B2.

Die Aufteilung der Probe in Probenbereiche B1, die sich im ersten Zustand 5 befinden, und Probenbereiche B2, die sich im zweiten Zustand 6 befinden, ermöglicht es nun, die Emission von Fluoreszenzstrahlung F auf ein Volumen der Probe P zu beschränken, das kleiner ist, als das ursprüngliche mit Anregungsstrahlung A beleuchtete Volumen. Es läßt sich somit also eine Struktur im fluoreszierenden Bild erreichen, die ursprünglich in der Anregungsstrahlungsverteilung nicht vorhanden war. Ursache dafür ist die geschickt eingesetzte Nichtlinearität der Kennlinie 17.

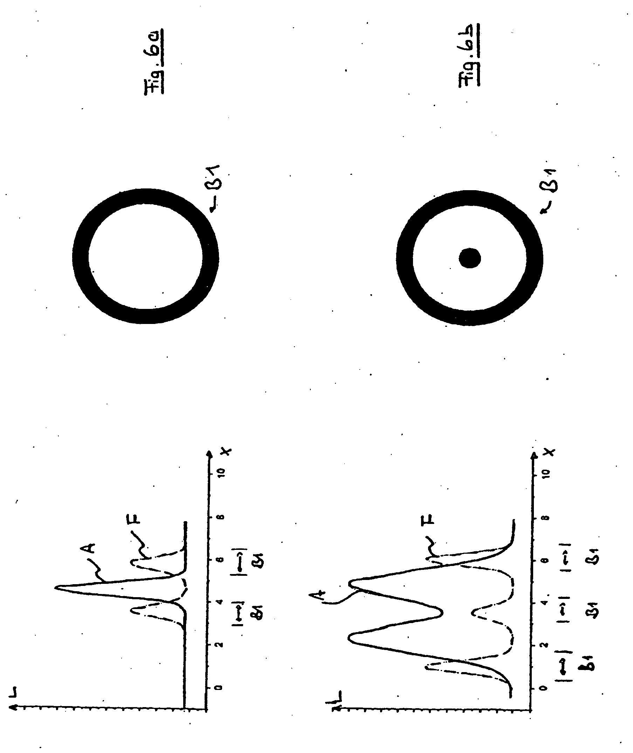

Die Fig. 6a und 6b zeigen zwei Verfahrensformen, wie die Anregungsstrahlungsverteilung zur Auflösungssteigerung aussehen kann. Beide Figuren zeigen links einen eindimensionalen Schnitt durch die Anregungsstrahlungsverteilung bzw. Fluoreszenzstrahlungsverteilung. Jeweils rechts ist das zweidimensionale Bild der Fluoreszenzstrahlungsverteilung in Draufsicht zu sehen.

In Fig. 6a wird eine punkförmige verteilte Anregungsstrahlung A eingestrahlt. Die Verteilung ist hier eine beugungsbegrenzte Airy-Verteilung. Hierdurch wird im Farbstoff Fluoreszenzstrahlung F mit einer ellipsoidförmigen Donut-Verteilung angeregt, die sich im zweidimensionalen Bild als lateral fluoreszierender, kreisförmiger Ring darstellt. Es fluoreszieren nur die Proben-Bereiche B1. Axial liegt ein fluoreszierender ellipsenförmiger Ring dar. Dieser Probenbereich B1 ist kleiner als die Beugungsgrenze der Anregungsstrahlung erlaubt.

Strahlt man dagegen, wie in Fig. 6b gezeigt, eine ebenfalls beugungsbegrenzte Donut-förmige Verteilung der Anregungsstrahlung A ein, ergibt sich ein abstrahlender Proben-Bereich B1, der einer verkleinerten Airy-Verteilung entspricht, welche von einem ringförmigen fluoreszierenden Bereich umgeben ist. In der Schnittdarstellung zeigen sich in der Verteilung der Fluoreszenzstrahlung F deshalb drei Peaks als Proben-Bereiche B1. Auch hier ist die Punktverwaschungsverteilung 16 kleiner als die Beugungsgrenze zuläßt. Die Verbesserung der Auflösung über die normale Punktverwaschungsverteilung hängt wesentlich von der Kombination aus Kennlinie 17 und Leistungsverteilung der Anregungsstrahlung A ab.

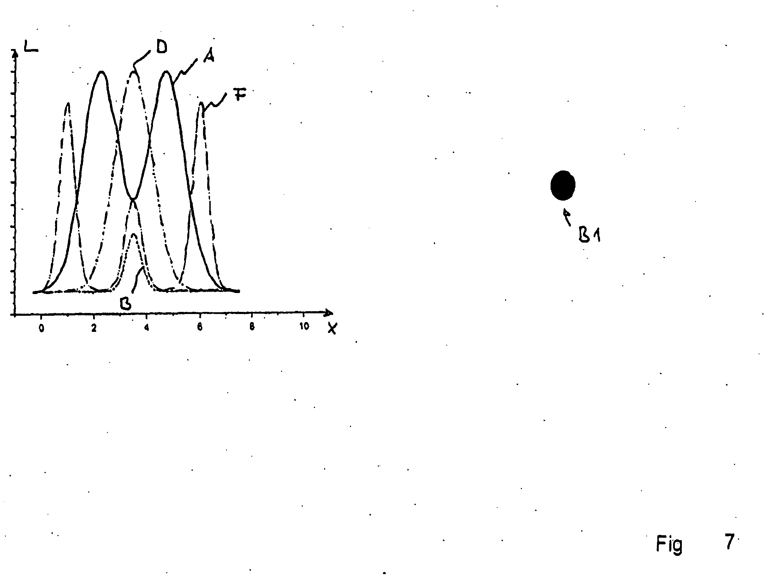

Zur Ausblendung des ringförmigen Außenbereichs ist es zusätzlich möglich, eine konfokale Detektion durchzuführen, die den mittleren Peak durch geeignete Einstellung eines konfokalen Detektionsvolumens D auswählt. Dies ist schematisch als dritte Verfahrensform in Fig. 7 dargestellt. Der nun noch detektierte fluoreszierende Proben-Bereich B1 besteht dann aus dem mittleren Peak. Insgesamt ist z.B. ein bildgebendes Volumen B (punktierte Linie in der rechten Darstellung der Fig. 7) erreicht, das zweieinhalb mal schmäler ist, als die konventionelle Punktverwaschungsverteilung, und sogar 1,7-mal schmäler, als eine konfokale Punktverwaschungsverteilung. Bei einer Donut-förmigen Anregungsverteilung, wie sie die durchgezogene Kurve in der rechten Darstellung der Fig. 6b bzw. 7 zeigt, ist die resultierende Verteilung des bildgebenden Volumens B bzw. der mittlere Peak der Punktverwaschungsverteilung der Fig. 6b radialsymmetrisch. Verwendet man zwei Beleuchtungsspots, erreicht man eine maximale Auflösungssteigerung entlang der Verbindungslinie der Spotmaxima.

Alternativ wird der äußere fluoreszierende Ring in Fig. 6b durch ein gezieltes Rückschalten des Farbstoffs aus dem zweiten Zustand 6 in den ersten Zustand 5 im Bereich des konfokalen Detektionsvolumens D ausgeblendet. Das Vorgehen/Prinzip ist dann wie folgt: Zuerst wird mit Anregungsstrahlung so angeregt, daß der zu untersuchende Probenabschnitt vollständig in den zweiten Zustand gelangt. Anschließend wird Rücksetzstrahlung R mit einer Verteilung entsprechend dem konfokalen Detektionsvolumen D eingestrahlt und damit ein Teil der Probe zurückgeschaltet. Bei nochmaliger Anregung mit der Anregungsstrahlungsverteilung A gemäß Fig. 7 gelangt dann nur der in diesem Probenteil liegende bildgebende Bereich B in den ersten Zustand und emittiert Fluoreszenzstrahlung F in Form des mittleren Peaks, wie er auch in der Variante der Fig. 7 verbleibt. Der ringförmige Außenbereich verbleibt im zweiten Zustand und fluoresziert nicht.

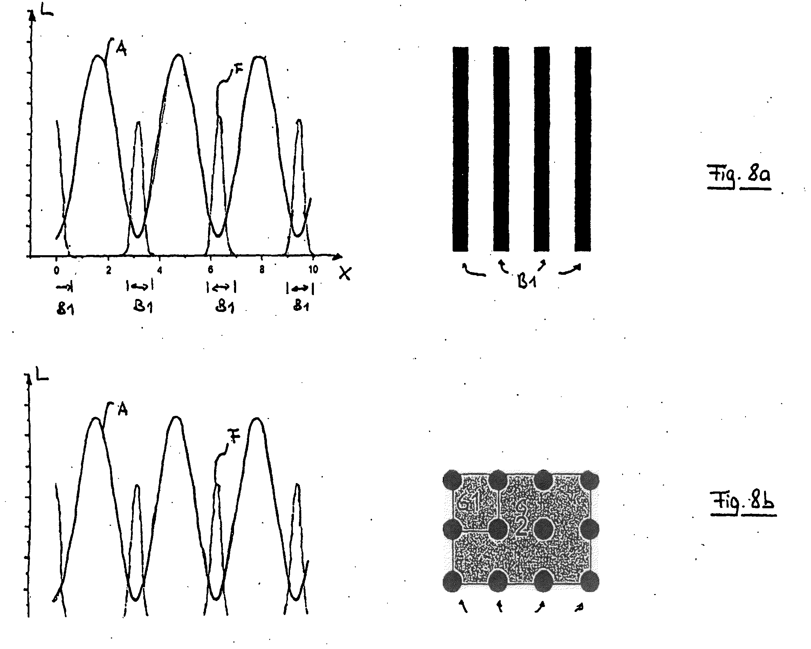

In einer vierten Verfahrensform erfolgt eine strukturierte flächige Beleuchtung, wie sie beispielsweise in Fig. 8a gezeigt ist. Eine in x-Richtung sinusförmig verteilte Anregungsstrahlung A führt in den Tälern der sinusförmigen Leistungsverteilung zu Fluoreszenzstrahlung F. Die fluoreszierenden Proben-Bereiche B1 sind streifenförmig. Die Streifen sind jedoch deutlich schmaler als die Streifen der sinusförmigen Verteilung der Anregungsstrahlung A. Vorteilhaft ist hierbei, daß die sinusförmige Verteilung der Anregungsstrahlung A als Minima keine Nullstellen aufweist bzw. aufweisen muß. Die resultierende Verteilung der Fluoreszenzstrahlung F hängt zwar in ihrer Höhe, nicht jedoch in der Breite von der Leistung der Anregungsminima ab. Die Tiefe der Minima der sinusförmigen Anregungsstrahlungsverteilung ist also unkritisch für die Breite der Streifen und somit für die Auflösung. Im Beispielfall ist die Periode der sinusförmigen Streifenverteilung der Anregungsstrahlung A an der Grenzfrequenz der Auflösung eingestellt. Als Detektor wird z.B. ein Matrixdetektor verwendet. Die Streifenbreite und mithin die Auflösung ist um Faktor 6 gegenüber der Grenzfrequenz der Auflösung verbessert. Ein hochaufgelöstes Bild wird nun durch Verschiebung des Streifenmusters gewonnen.

Alternativ kann statt einer streifenförmigen Weitfeldbeleuchtung auch eine brennlinienförmige Beleuchtung verwendet werden, wobei die Linie entlang ihrer Längsachse (z.B. sinusförmig) moduliert ist, so daß die Leistung in Linienabschnitten über dem Schwellwert und in Linienabschnitten unter dem Schwellwert liegt. Die Scanbewegung erfolgt senkrecht zur Linie und entlang der Linie. Der Detektor ist ein geeignet hochauflösender Zeilendetektor.

Fig. 8b zeigt eine Weiterbildung der vierten Verfahrensform der Fig. 8a. In dieser fünften Verfahrensform erfolgt die Strukturierung der Verteilung der Auflösungsstrahlung A in beiden lateralen Achsen, d. h. in der Probenebene, so daß eine matrixförmige Beleuchtungsspotverteilung gegeben ist. Dies ist in der Schnittdarstellung der linken Hälfte der Fig. 8b eindimensional dargestellt. Senkrecht zur optischen Achse ist eine Matrix aus hellen Anregungsspots auf die Probe abgebildet. Jedem Beleuchtungsspot wird nun ein Detektor zugeordnet. Eine Verschiebung des Spotmusters relativ zur Probe erlaubt es, die Zwischenräume zwischen den Punkten ebenfalls zu vermessen. Der Bereich in dem die Verschiebung des matrixförmigen Musters zu erfolgen hat, ist in Fig. 8b als Gebiet G1 dargestellt. Durch eine Abrasterung der Spotmatrix, beispielsweise wie mit einem konventionellen Laserscanningmikroskop bekannt, wird insgesamt das gesamte Gebiet G2 aus Einzelgebieten G1 zusammengesetzt. Durch diese Parallelisierung ist eine sehr hohe Scangeschwindigkeit erreicht. Zugleich ist die Auflösung, wie die schmalen Peaks der Fluoreszenzstrahlung F in der Schnittdarstellung zeigen, über die Auflösung der Anregungsstrahlungsverteilung hinaus gesteigert.

Obwohl bislang nur die laterale Auflösung erwähnt wurde, ist auch die axiale Auflösung für die Ausführungsformen verbessert.

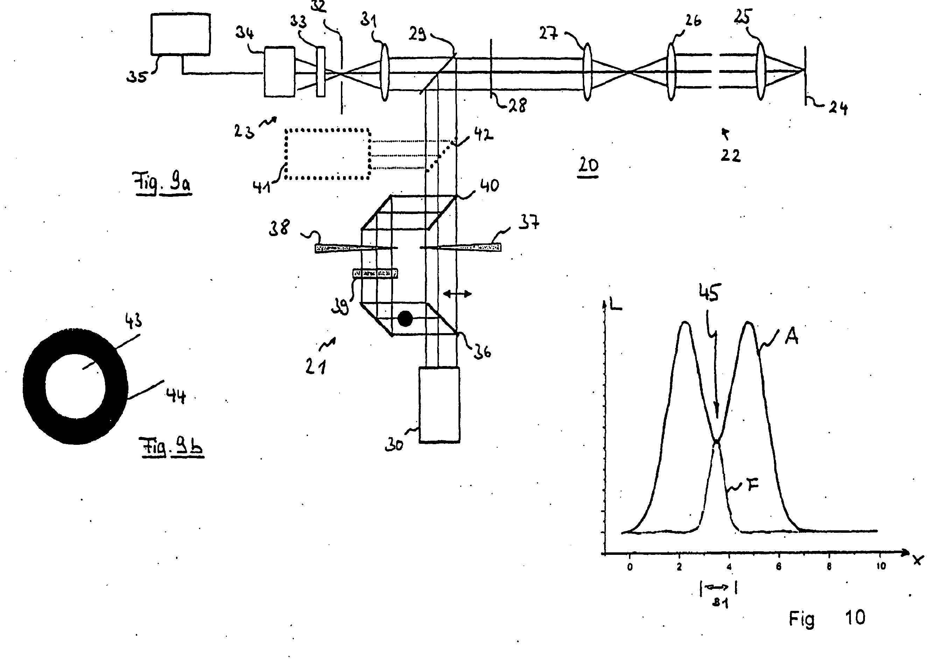

Fig. 9a zeigt ein Laserscanningmikroskop, das jede der erläuterten Verfahrensformen realisieren kann. Für die Verfahrensformen 1 bis 3 ist das Laserscanningmikroskop 20 z. B. als einzelpunktscannendes Mikroskop ausgebildet. Es weist ein Anregungsmodul 21, ein Mikroskopmodul 22 sowie ein Detektormodul 23 auf. Im Mikroskopmodul 22 befindet sich eine Probe 24 im Fokus eines Objektivs 25, dem in Beleuchtungsrichtung eine Tubuslinse 26 vorgeschaltet ist. Vor dieser Optik liegt eine Scanoptik 27, die zusammen mit einem Scanner 28 ein Abscannen der Probe 24 durch Verschieben des Fokuspunktes auf der Probe ermöglicht. Ein Hauptfarbteiler 29 koppelt die Strahlung aus dem Anregungsstrahlungsmodul 21 in das Mikroskopmodul 22 ein und trennt aus dem Mikroskopmodul 22 von der Probe 24 aufgenommene Strahlung zum Detektormodul 23 ab.

Das Anregungsmodul 21 verfügt über eine Lichtquelle 30, deren Strahlung über den Hauptfarbteiler 29 zum Fokuspunkt in der Probe 24 gebündelt wird. Die im Fokuspunkt der Probe 24 angeregte Fluoreszenzstrahlung F wird vom Objektiv 25 gesammelt und am Hauptfarbteiler 29 aufgrund der im Vergleich zur Anregungsstrahlung A geänderten Spektraleigenschaften zu einer Pinholeoptik 31 ausgekoppelt, der ein Pinhole 32 sowie ein (optionaler) Blockfilter 33 nachgeschaltet sind. Ein Punkt-Detektor 34 erfaßt die Leistung der Fluoreszenzstrahlung F am Fokuspunkt. Die Erfassung kann zusätzlich spektral aufgelöst, polarisationsaufgelöst und/oder zeitaufgelöst erfolgen. Die Signale des Detektors 34 werden von einem Steuergerät 35 ausgelesen, das insgesamt den Betrieb des Laserscanningmikroskops 20 steuert.

Zur Auflösungssteigerung erfolgt die Einstrahlung der Anregungsstrahlung A in den Fokuspunkt 24 mit einer bestimmten Leistungsverteilung. Um diese vorzugeben und einzustellen, ist ein geeigneter Aufbau im Anregungsmodul 21 vorgesehen. Die Bauweise der Fig. 9a weist einen Strahlteiler 36 auf, der 50% der Strahlleistung der Lichtquelle 30 auskoppelt. In der Ausführungsform handelt es sich bei dem Strahlteiler 36 um einen Polarisationsstrahlteiler. Die derart aufgespaltenen Teilstrahlen werden nachher über einen weiteren Strahlteiler 40 wieder zu einem gemeinsamen Strahl überlagert, wobei die Intensitäten und Phasen der Teilstrahlen zuvor geeignet eingestellt werden. Zusätzlich ist in einem Teilstrahl ein Phasenelement 39 gestellt, das entweder als festes Phasenelement oder als variabel einstellbares Phasenelement ausgebildet werden kann. Das Phasenelement 39 hat z. B. einen phasenverändernden Bereich 44 sowie einen phasenneutralen Bereich 49, so daß eine donutförmige Leistungsverteilung im Strahl erzeugt wird. Nach Überlagerung der beiden Teilstrahlen nach dem Strahlteiler 40 erhält man Anregungsstrahlung A gemäß Fig. 10. Der Aufbau des Phasenelementes 39 ist exemplarisch in Fig. 9b gezeigt. Zur Einstellung der Leistungsanteile der beiden Teilstrahlen vor der Überlagerung sind in jeden Teilstrahl noch variable Abschwächer 37 bzw. 38 gestellt.

Im Ergebnis erhält man eine Verteilung der Leistung der Anregungsstrahlung A, wie sie in Fig. 10 als Schnittdarstellung entlang einer senkrecht zur optischen Achse verlaufende x-Achse gezeigt ist. Die Verteilung weist ein Minimum 45 auf, dessen Tiefe durch Einstellung der Abschwächer 38 bzw. 37, d.h. durch Änderung der relativen Leistung der beiden Teilstrahlen variabel einstellbar ist, z. B. durch das Steuergerät 35. Die Anpassung des Minimums 45 erlaubt es, die Intensität der ebenfalls in Fig. 10 eingezeichneten Fluoreszenzstrahlung F optimal einzustellen.

Das hinsichtlich der Tiefe einstellbare Minimum 45 kann auch durch den Einsatz eines variabel einstellbaren Phasenelementes ohne Bildung von Teilstrahlen erzeugt werden. Für ein solches Phasenelement kommt eine Matrix aus Flüssigkristallen in Frage, bei der die Phase jedes einzelnen Pixels einstellbar ist. Natürlich sind noch andere Einrichtungen zur Erzeugung einer donatförmigen Strahlverteilung mit einstellbarem Minimum 45 möglich.

Für ein optionales Rückschalten der Proben-Bereiche B2 vom zweiten Zustand 6 in den ersten Zustand 5 kann eine Rücksetzstrahlungsquelle 41 vorgesehen werden, die über einen dritten Teiler 42 in den Anregungsstrahlengang des Anregungsmoduls 21 eingebunden ist. Diese Bauweise ist jedoch optional, weshalb die Darstellung der Fig. 9a auch eine gestrichelte Darstellung für diese Elemente zeigt. Die Rücksetzstrahlungsquelle 41 ist nur dann erforderlich, wenn der Farbstoff der Probe 24 nicht spontan wieder in den ersten Zustand zurückkehrt, sondern eines aktiven Rücksetzens durch optische Rücksetzstrahlung R bedarf. Rücksetzstrahlung kann jedoch auch anderweitig auf die Probe 24 aufgebracht werden, beispielsweise durch eine Einstrahlung schräg zur optischen Achse des Objektivs 25 mit Hilfe einer seitlich vom Laserscanningmikroskop angebrachten Rücksetzstrahlquelle.

Das Mikroskop der Fig. 9a kann die eingangs geschilderten Verfahrensformen ausführen. Die dritte Verfahrensform erfordert dabei die Verwendung des Pinholes 32 und der Pinholeoptik 31 im Detektormodul 23. Immer dann, wenn man keine konfokale Detektion benötigt, können die dafür nötigen Bauteile (31, 32) entfallen.

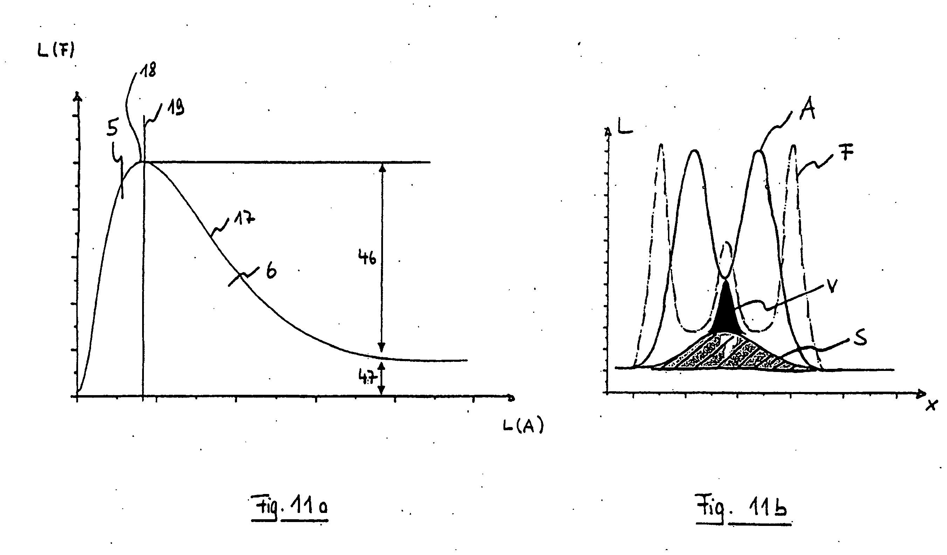

Fig. 11a zeigt eine weitere Verbesserungsmöglichkeit des erfindungsgemäßen Vorgehens auf. Der Übergang der Probe im Teil-Bereich B2 aus dem ersten Zustand in den zweiten Zustand 6 kann unvollständig stattfinden. Dies ist beispielsweise dann der Fall, wenn die Fluoreszenzkennlinie 17 nach dem Maximalwert 18, d.h. für Leistungen der Anregungsstrahlung A oberhalb des Schwellwertes 19, nicht steil genug abfällt. Im Beispiel der Fig. 11a geht die Kennlinie 17 auch bei hohen Anregungsstrahlungsleistungen nicht auf Null zurück. Dies führt zu einer Restfluoreszenz 47 in den Proben-Bereichen B2, die im zweiten Zustand 6 sind, da der geminderte Anteil 46 nicht dem Maximalwert 18 entspricht. Würde man die Fluoreszenzstrahlung F dann mit dem Mikroskop gemäß Fig. 9a beispielsweise in Realisierung der dritten Verfahrensform vermessen, so würde sich das bildgebende Volumen B aus einem niedrig aufgelösten Sockel S und einer hochaufgelösten Verteilung V zusammensetzen. Dies ist in Fig. 11b schematisch dargestellt, die den Sockel S schraffiert und die hochaufgelöste Verteilung V schwarz zeigt.

Der gleiche Effekt kann auftreten, wenn in der Probe eine starke Diffusion des fluoreszierenden Materials, beispielsweise der Farbstoffmoleküle, herrscht. Auch dann ergibt sich eine Restfluoreszenz 47 in den Proben-Bereichen B2, jedoch nicht aufgrund einer vergleichsweise schwach abfallenden Kennlinie 17, sondern durch Diffusion des fluoreszierenden Materials.

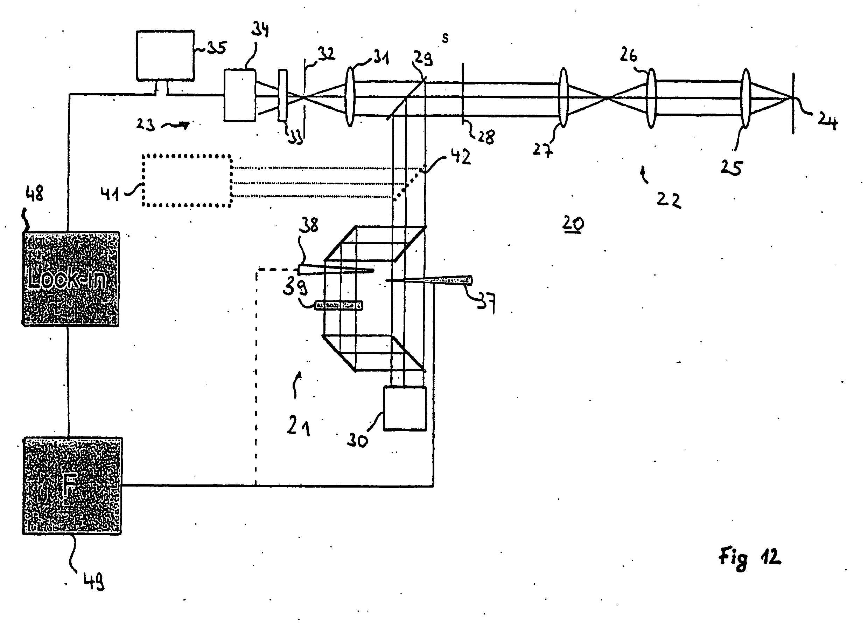

Der Sockel S läßt sich durch geeignete Bildaufnahme unterdrücken. Eine dies realisierende zweite Ausführungsform eines Laserscanningmikroskops 20 ist exemplarisch in Fig. 12 dargestellt. Mit der Bauweise gemäß Fig. 9a übereinstimmende Komponenten sind mit denselben Bezugszeichen versehen, so daß auf ihre nochmalige Erläuterung verzichtet werden kann.

Im Unterschied der Bauweise der Fig. 9a ist nun der Detektor 34 mit einem Lock-In-Verstärker 48 verbunden, wobei diese Verbindung in Fig. 12 lediglich exemplarisch über das Steuergerät 35 realisiert ist. Natürlich ist auch eine direkte Verbindung möglich. Auch kann der Lock-In-Verstärker 48 in das Steuergerät 35 integriert werden. Der Lock-In-Verstärker 48 ist mit einem Frequenzgenerator 49 verbunden, der das Minimum 45 in seiner Amplitude moduliert. Hierzu wird die Leistung einer der beiden Teilstrahlen im Anregungsmodul 21 geeignet moduliert, was z.B. durch eine Ansteuerung einer der beiden Abschwächer 37 oder 38 geschieht. In der Darstellung der Fig. 12 ist die Ansteuerleitung für den Abschwächer 38 gestrichelt dargestellt, um diese Option anzudeuten. Natürlich kann die Ansteuerung der Abschwächer auch durch das Steuergerät 35 erfolgen, das das Signal des Frequenzgenerators 49 entsprechend auswertet. Wie bereits erwähnt, können der Lock-In-Verstärker 48 und/oder der Frequenzgenerator 49 Bestandteile des Steuergerätes 35 sein.

Die vom Frequenzgenerator 49 zur Modulation des Minimums bereitgestellten Frequenz wird auch dem Lock-In-Verstärker 48 zugeführt. Durch die Modulation des Minimums 45 verändert sich das Signal aus den Proben-Bereichen im ersten Zustand 5, wohingegen Signale aus dem Sockel S konstant bleiben. Der Lock-In-Verstärker 48 separiert die modulierten Signale heraus und unterdrückt Signale aus dem Sockel S. Im Ergebnis erfolgt eine Trennung der Verteilung V vom Sockel S, und die hochaufgelöste Detektion ist auch bei einem unvollständigem Übergang in den zweiten Zustand 6 erreicht.

Verwertet man gezielt den Gleichanteil des Signals, erreicht man eine zusätzliche Bildinformation, die nicht hochaufgelöst ist. Diese Bildinformation kann sich z.B. auf andersartig fluoreszierende Proben-Bereiche/-Eigenschaften beziehen. Die hoch und niedrig aufgelösten können beliebig codiert (z.B. farbcodiert) überlagert dargestellt werden.

Alternativ oder zusätzlich zu dieser Lock-In-Detektion können auch zwei Bilder aufgezeichnet werden. Ein erstes Bild wird mit Anregungsstrahlungsverteilung mit Minimum 45, das zweite ohne Minimum 45 aufgezeichnet. Zur Separierung der hochaufgelösten Verteilung V vom Sockel S werden dann nur noch die Bilder voneinander subtrahiert (erstes Bild minus zweites Bild). Das Ergebnisbild enthält nur noch die Informationen mit der hochaufgelösten Verteilung V. Weitere Möglichkeiten zur Unterdrückung eines niedrig aufgelösten Sockels können die Nutzung der unterschiedlichen optischen Eigenschaften des ersten Zustands 5 und des zweiten Zustands 6 sein, beispielsweise wenn sich die Lebensdauer der beiden Zustände unterscheiden. Auch kann man eine unterschiedliche Charakteristik des Emissionsspektrums verwenden, bzw. eine unterschiedliche Charakteristik des Absorptionsspektrums zwischen erstem Zustand 5 und zweiten Zustand 6.

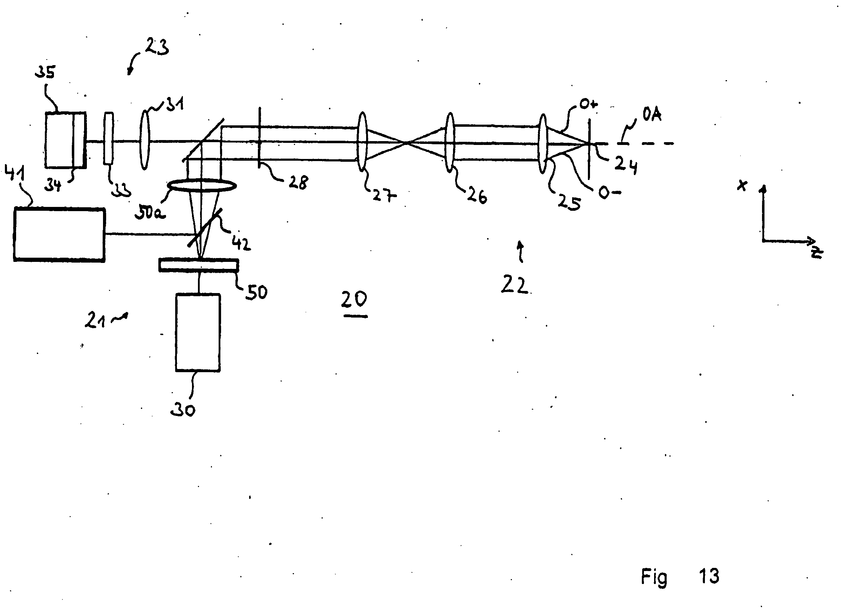

Fig. 13 zeigt eine nochmalige Abwandlung des Laserscanningmikroskops 20 der Fig. 9a zur Realisierung einer der Verfahrensformen mit linienförmiger Beleuchtung. Auch hier sind mit der Fig. 9a übereinstimmende Elemente mit denselben Bezugszeichen gekennzeichnet, so daß auf deren Beschreibung wiederum verzichtet werden kann. Weiter sind nur die Mittelstrahlen eingezeichnet.

Die nun kohärente Lichtquelle 30 strahlt ihre Strahlung durch ein Gitter 50, das zwei 1. Beugungsordnungen, o+ und o-, sowie eine 0.-Beugungsordnung erzeugt. Dem Gitter ist eine Zylinderlinse 50a nachgeordnet, die hier ein Beispiel für ein anamorphotisches Element ist. Auf die Probe wird eine senkrecht zur optischen Achse liegende Linie fokussiert.

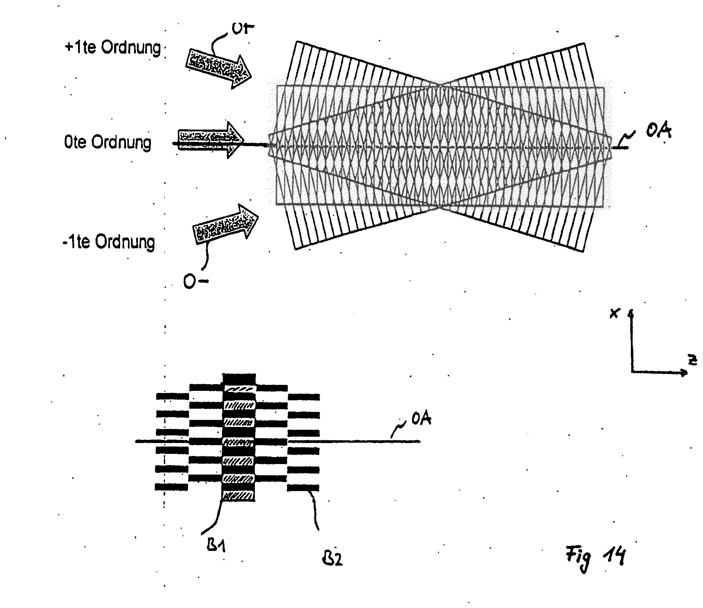

Die Beugungsordnungen fallen beim Fokussieren streifend zueinander ein und gelangen so in der Probe zur Interferenz. Durch den Talbot-Effekt entsteht ein sogenanntes Talbotgitter entlang der optischen Achse OA. Dies ist schematisch in der oberen Hälfte der Fig. 14 gezeigt. Die +1., die 0. sowie die -1. Ordnung fallen in der Probe 24 unter verschiedenen Winkeln ein und die Interferenzen erzeugen die dem Fachmann bekannte Talbotstruktur.

Die Wirkung innerhalb der Probe zeigt sich in der unteren Hälfte Fig. 14, die einen Tiefenschnitt (x,z-Ebene) durch die Probe zeigt. An den Stellen hoher Intensität (schwarze Bereiche B2) gelangt die Probe in den zweiten Zustand 6, d. h. es wird eine Entvölkerung der angeregten Zustände durch Umschalten der Farbstoffmoleküle erreicht. In den Bereichen B1 geringer Intensität verbleibt die Probe im ersten Zustand 5 (schraffierte und weiße Bereiche).

Die Detektion erfolgt mit einem Zeilendetektor 34, der in der Bauweise der Fig. 13 exemplarisch als mit dem Steuergerät 35 vereinigt dargestellt ist. Dem Zeilendetektor 34 ist wieder (optional) ein Blockfilter 33 vorgestellt. Weiter ist dem Zeilendetekor 34 eine (in Fig. 13 nicht dargestellte, da direkt auf den Zeilendetektor 34 aufgebrachte) entlang der x-Achse liegende Schlitzblende vorgeordnet, um die erforderliche konfokale Selektion einer Tiefenebene zu bewirken und dadurch nur die schraffierten Bereiche zu detektieren.

Der Scanner 28 ermöglicht die Bewegung der Anregungsstrahlungsverteilung über die Probe 24 senkrecht zur optischen Achse, also entlang der x- und y-Achse. Optional kann mit der Rücksetzstrahlungsquelle 41 beispielsweise eine homogene Line entlang der x-Achse in der Probe 24 erzeugt werden, die ein Umschalten der Farbstoffe aus dem zweiten Zustand 6 in den ersten Zustand 5 ermöglicht, wie dies Fig. 5 veranschaulicht. Diese Linie kann auch ein Beleuchtungsmuster aufweisen, daß passend zu den Proben-Bereichen B2 im zweiten Zustand 6 liegt, da nur diese Bereiche zurückgesetzt werden müssen.

Das Laserscanningmikroskop gemäß Fig. 13 realisiert also die Verfahrensform gemäß Fig. 8a. Die Tiefe der Minima 45 kann durch die Güte des Gitters bzw. die individuelle Abschwächung der einzelnen Ordnungen erfolgen.

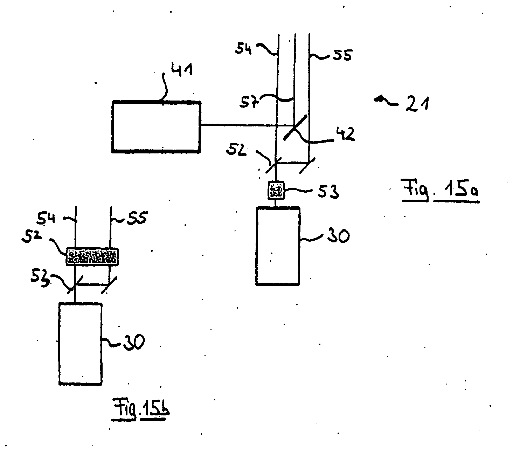

Fig. 15a zeigt eine Anordnung zur Realisierung der Verfahrensform gemäß Fig. 8b, wobei vom Laserscanningmikroskop 20 hier nur das Anregungsmodul 21 gezeigt ist, da das Mikroskopmodul 22 ansonsten den bereits geschilderten Aufbau hat. Aus der Lichtquelle 30 werden mittels eines ersten Strahlteilers 53 zwei Teilstrahlen erzeugt, hier senkrecht zur Zeichenebene beabstandet. Ein zweiter Strahlteiler 52 erzeugt insgesamt vier parallel laufende Teilstrahlen. Fig. 15b zeigt die Anordnung in einem um 90° Grad gedrehten Schnitt. Insgesamt liegen vier Teilstrahlen 54, 55 gleicher Intensität (gezeichnet sind die Mittelstrahlen) vor. In der Zeichnung nehmen jeweils zwei Teilstrahlen den gleichen Weg, so daß sie verdeckt sind.

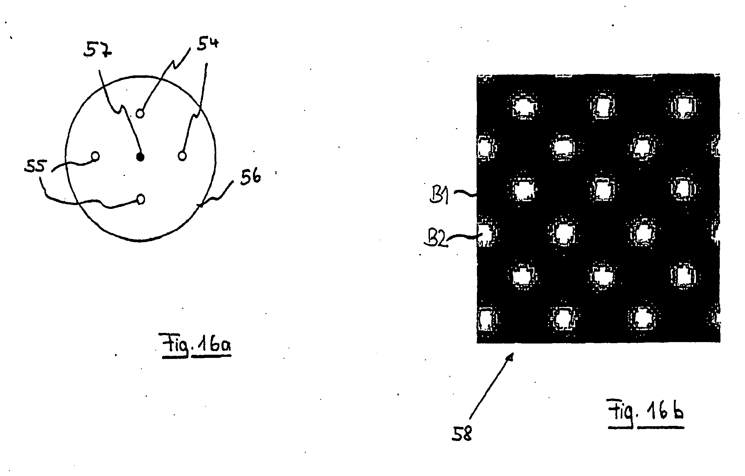

Die Teilstrahlen werden durch Linsen in eine Pupille des Mikroskopmoduls 22 fokussiert, so daß sich innerhalb einer Berandung 56 der Pupille die in Fig. 16a dargestellte Punktverteilung ergibt. Die vier Teilstrahlen 55, 54 nehmen die Ecken eines Quadrates ein. In der Probe 24 gelangen die Teilstrahlen zur Interferenz, wodurch senkrecht zur optischen Achse ein Multispotmuster 58 gemäß Fig. 16b auf der Probe 24 entsteht. Die Tiefe der Nullstellen dieses Multispotmusters 58 kann beispielsweise durch die Änderung der Intensitäten der jeweils diagonal gegenüberliegenden Strahlen 54, 55 variiert werden. Hierzu sind geeignete einstellbare Abschwächer (nicht gezeigt) für die Teilstrahlen vorgesehen.

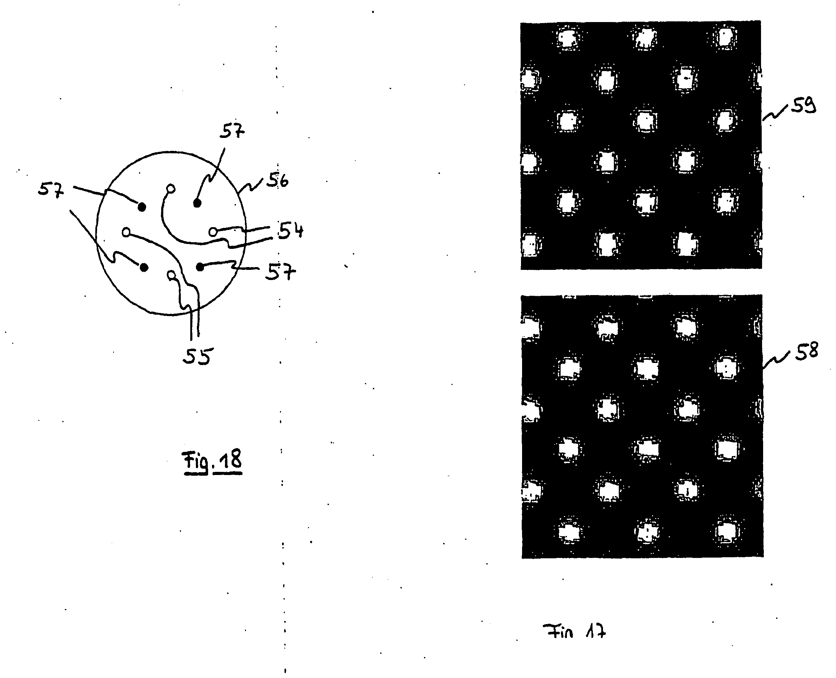

An den Stellen hoher Intensität (helle Bereiche B2) im Multispotmuster 58 der Fig. 16b gelangt die Probe 24 in den zweiten Zustand 6. Fluoreszenzstrahlung F entsteht in den Bereichen B1 geringer Intensität (dunkle Bereiche). Die Fluoreszenzstrahlung F wird dann wie üblich am Hauptfarbteiler 29 abgeteilt. Der Detektor 54 ist ein auf das Spotmuster angepaßter Matrixdetektor, optional mit vorgeschalteter Pinholemaske. Die Detektorelemente sind auf die Bereiche B1 ausgerichtet. Der Scanner 28 ermöglicht wiederum die Verschiebung der Anregungsstrahlungsverteilung über die Probe 24 in x- und/oder y-Richtung. Fig. 17 zeigt im unteren Bild das Multispotmuster 58 und darüber das damit angeregte Fluoreszenzmuster 59.

Von der Rücksetzlichtquelle 41 kann ein weiterer Strahl 57 in die Pupille fokussiert werden, der damit eine homogene Fläche in der Probe 24 ausleuchtet. Dadurch erfolgt ein Rückschalten der Fluoreszenzmoleküle aus dem zweiten Zustand 6 in den ersten Zustand 5, wie bereits erläutert zwischen zwei Scanschritten und gegebenenfalls auch innerhalb eines Schanschrittes.

Der Rücksetzstrahl 47 kann aber auch ein Beleuchtungsmuster aufweisen, das den Bereichen B2 entspricht, da nur diese rückgesetzt werden müssen. Hierzu wird der Strahl 47 analog zu den Teilstrahlen 54, 55 ebenfalls in vier Teilstrahlen zerlegt und in die Pupille abgebildet, so daß sich innerhalb der Berandung 56 der Pupille beispielsweise die in Fig. 18 gezeigte Verteilung ergibt. Zusätzlich ist die optische Achse der Teilstrahlen 57 der Rücksetzstrahlung R gegenüber der optischen Achse der Anregungsstrahlung A derart verkippt, daß die in der Probe entstehenden Minima des Multispotmuster 58 der Anregungsstrahlung A mit den Maxima des Multispotrücksetzmusters zusammenfallen Die Ausführungsform gemäß Figur 15a in der Variante von Fig. 18 ist ein exemplarisches Beispiel dafür, daß durch geeignete Strukturierung der Rücksetzstrahlung eine proben- bzw. farbstoffschonende Rücksetzung nur in den Bereichen B2 erfolgt.

Es kommt darauf an, daß die Probe durch geeignete Einstrahlung von Anregungsstrahlung A in Bereiche B1 im ersten Zustand und in Bereiche B2 im zweiten Zustand aufgeteilt wird. Die Überführung von Proben-Bereichen in den zweiten Zustand kann deshalb auch durch zur Auswahl einer Tiefenebene der Probe (vgl. Fig. 14) eingesetzt werden, so daß Proben-Bereiche B1 nicht zu einem Übersprechen benachbarter Detektorelemente/-regionen beitragen können.

Für das vorstehend in verschiedenen Varianten geschilderte Verfahren ist die Einstellung der Leistung der Anregungsstrahlung A abhängig von der Fluoreszenzcharakteristik der Probe unter besonderer Berücksichtigung der örtlichen Verteilung der Anregungsstrahlung A von Bedeutung. Insbesondere bestimmt die Tiefe eines oder mehrer Minima 45 und die Höhe der entsprechenden Maxima der Anregungsstrahlung der Verteilung die erreichbare Auflösungssteigerung. Ein Optimierung der Einstellung der örtlichen Leistungsverteilung der Anregungsstrahlung A kann auf zwei Wegen realisiert werden: Bei Kenntnis der Kennlinie 17, die dazu beispielsweise dem Steuergerät 35 entsprechend zur Verfügung gestellt ist/wird, wird für eine gegebene örtliche Anregungsverteilung der optimale Leistungspegel errechnet und entsprechend eingestellt, beispielsweise durch Ausgabe eines Sollwertes oder sogar direkte Ansteuerung des Anregungsmoduls 21.

Alternativ oder zusätzlich kann an einem Testpräparat oder einer Referenzstelle der zu untersuchenden Probe die tatsächliche Auflösung ermittelt und der optimale Leistungspegel bei gebender Anregungsverteilung in einem interativen Prozeß ermittelt und dann zur Abbildung der Probe 24 verwendet werden.

Anstelle einer reinen Leistungsskalierung kann natürlich auch die Verteilung verändert werden, beispielsweise durch entsprechende Einstellung des Phasenelements 39.

Die Fluoreszenzcharakteristik der Probe 24, beispielsweise die Fluoreszenzcharakteristik eines Farbstoffs, kann durch Untersuchung an einem Testpräparat oder einer Referenzstelle der Probe bereits unter späteren Bildgewinnungsbedingungen ermittelt werden. Dazu wird die Leistung der detektierten Fluoreszenzstrahlung F als Funktion der Leistung der Anregungsstrahlung A an einen Punkt oder einem Gebiet der Probe ermittelt. Für eine besonders gute Einstellung ist es günstig, wenn die Fluoreszenzcharakteristik, d.h. die Kennlinie 17 nicht von der Konzentration des fluoreszierenden Materials, beispielsweise des Farbstoffs abhängt (im Gegensatz zur emittierten Leistung der Fluoreszenzstrahlung F). Das Steuergerät 35 des Scanningmikroskops 20 kann dazu aus der ermittelten Kurve 17 oder einer zugeführten bzw. in einem Speicher abgelegten Kurve 17 automatisch die optimale Leistung ermitteln und entsprechend einstellen.

Die iterative Bestimmung ist immer dann vorteilhaft, wenn die Fluoreszenzeigenschaften stark probenabhängig sind und eine Referenzstelle an der Probe für die Ermittlung der Fluoreszenzcharakteristik vorhanden ist oder nicht gefunden werden kann. In diesem Fall kann man entweder an einem begrenzten Gebiet innerhalb oder außerhalb des interessierenden Probenfeldes oder anhand einer Bildgebung im gesamten abzubildenden Probenfeld eine Leistungsoptimierung vornehmen bzw. durch das Steuergerät 35 ausführen lassen. Anhand eines Gütekriteriums der Auflösung (z.B. der Kontrast in einer ausgewählten Stelle oder die Ausdehnung des im Bild übertragenen Frequenzbereichs im Fourierraum) wird die Anregungsleistung optimiert. Dabei ist es im allgemeinen ausreichend, die Leistung im Minimum der Anregungsverteilung bzw. eine räumlich breit verteilte Untergrundleistung anzupassen.

Die Anregungsstrahlung A und die Rücksetzungsstrahlung R können aus einer einzigen Strahlungsquelle erzeugt werden. Die Strahlungsquelle kann entweder direkt umschaltbar oder mit einer nachgeordneten Selektionsanordnung versehen sein.

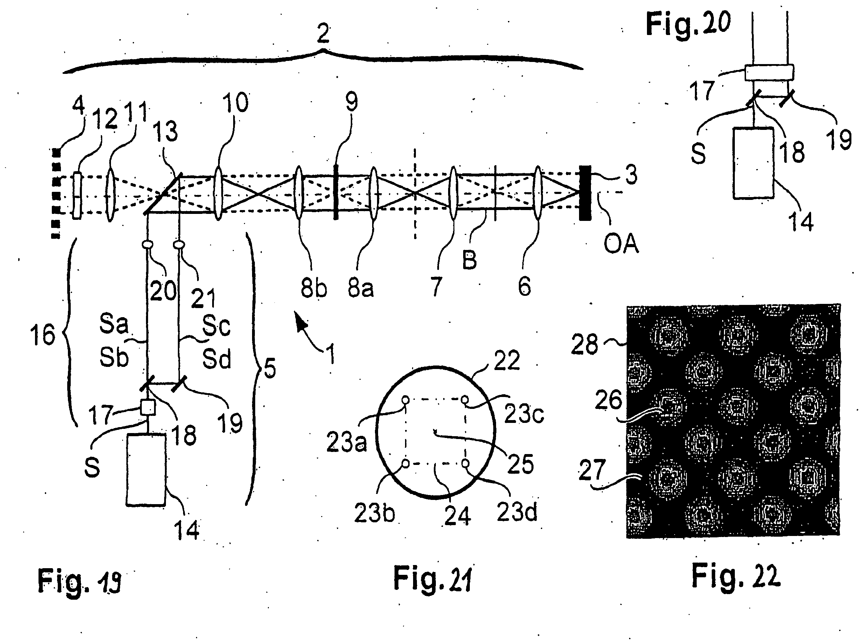

Figur 19 zeigt ein Laser-Scanning-Mikroskop 100 in schematischer Darstellung, das auch unabhängig vom bisher beschriebenen Konzept verwendet werden kann. Die durchgezogenen Linien stellen den Beleuchtungsstrahlengang B dar; die gestrichelten Linien den Detektionsstrahlengang 102. Das Laser-Scanning-Mikroskop bildet eine Probe 103 rasternd auf einen Detektor 104 ab, wobei die Probe mittels einer Beleuchtungsquelle 105 beleuchtet wird.

Der Detektionsstrahlengang 102 weist von der Probe 103 zum Detektor 104 längs einer optischen Achse OA ein Objektiv 106 sowie eine Tubuslinse 107 auf, der ein Scanobjektiv 108a folgt, nach der ein Scanner 109 vorgesehen ist. Nach einer Relaisoptik 108b, 110 sowie einer Pinholeoptik 111 passiert die Strahlung einen Strahlteiler 113 und gelangt zu einem Detektor 104, der hier als Matrixdetektor ausgebildet ist, und dem ein Filter 112 zum Abblocken letzter Anteile der Beleuchtungsstrahlung vorgeordnet ist. Natürlich kann der Detektionsstrahlengang 102 auch anders ausgestaltet sein, beispielsweise kann man auf den Filter 112 sowie auf das in der Bauweise der Figur 20 zwischen den Elementen 108a und 107 vorgesehene Zwischenbild, das durch eine gestrichelte Linie symbolisiert ist, verzichten.

Im in Figur 19 gezeigten Mikroskop 100 sind die Pupillenebenen, in denen der Scanner 109 sowie der noch zu erläuternde Strahlteiler 113 liegen, zueinander und zur rückwärtigen Brennebene des Objektives 106, die zwischen den Elementen 106 und 107 als durchgezogene Linie eingezeichnet ist, konjugiert.

Die Beleuchtungsquelle 105 weist einen Laser 114 auf, der durch eine Teilereinrichtung 116, die noch näher erläutert wird, vier Teilstrahlen Sa, Sb, Sc, Sd erzeugt, wobei in Figur 19 nur die Mittelstrahlen eingezeichnet sind. Die Teilereinrichtung 116 fokussiert diese vier Teilstrahlen Sa-d, von denen in der schematischen Darstellung der Figur 19 nur zwei zu sehen sind (die anderen zwei liegen senkrecht zur Zeichenebene übereinander) auf den Strahlteiler 113.

Im einzelnen weist die Teilereinrichtung 116 zwei Teiler 117 und 118 und einen Umlenkspiegel 119 auf, die aus dem einen vom Laser 114 abgegebenen Strahl S vier parallele Teilstrahlen Sa, Sb sowie Sc und Sd erzeugen. In der Darstellung der Figur 19 liegen die Teilstrahlen Sa und Sb übereinander, wie auch die Teilstrahlen Sc und Sd. Linsen 120 und 121 in der Teilereinrichtung 116 bewirken die Fokussierung derart, daß die Teilstrahlen Sa-c auf vier Punkte auf der Fläche des Strahlteilers 113 fokussiert werden.

Die Erzeugung der vier Teilstrahlen Sa-c kann natürlich auch durch eine andersartig ausgebildete Teilereinrichtung 116 oder grundsätzlich anders erfolgen, beispielsweise in dem vier Laser 114 verwendet werden. Eine mögliche weitere Ausgestaltung für die Teilereinrichtung 116 ist in Figur 20 gezeigt, in der der Teiler 118 und der Spiegel 119 mit dem Teiler 117 vertauscht sind.

Figur 21 zeigt den Strahlteiler 113 in Draufsicht auf dessen Strahlteilerfläche 122. Auf der Strahlteilerfläche 122 sind vier reflektierende Spiegelflächenelemente 123a, 123b, 123c und 123d angeordnet, die an den Eckpunkten eines gedachten Quadrates 124 liegen, dessen Zentrum der Durchstoßpunkt 125 der optischen Achse OA bildet. Nur dort ist die Strahlteilerfläche 125 reflektierend, im übrigen Bereich ist sie transmittierend zumindest für Detektionsstrahlung.

Die Beleuchtungsquelle 105 fokussiert die vier Teilstrahlen Sa-d auf die vier Spiegelflächenelemente 123a-d. In der Probe 103 gelangen die derart in die Pupille fokussiert und reflektierten Teilstrahlen zur Interferenz, wodurch das in Figur 22 dargestellte Multispot-Muster 128 in der Probe entsteht. Das Multispot-Muster 128 ist eine regelmäßige Anordnung von Lichtflecken 126, die von einem Dunkelbereich 127 umgeben sind. Die Intensitätsdifferenz zwischen den Lichtflecken 126 und dem Dunkelbereich 127, also die Tiefe der Nullstellen, kann durch Änderung der Intensitäten der jeweils gegenüberliegenden Teilstrahlen Sa, Sd und Sb, Sc variiert werden. Dabei werden diagonal (bezogen auf die optische Achse) gegenüberliegende Teilstrahlen oder jeweils durch einen dazwischenliegenden Teilstrahl getrennte Teilstrahlen vorzugsweise gleichsinnig eingestellt. Bei drei Teilstrahlen wird einer gegenüber zwei verstellt (oder umgekehrt).

Die räumliche Ausdehnung des Musters 128 kann durch Variation des Vergrößerungsmaßstabes des Mikroskops (z.B. Variation der Brennweite bei 110 und 108b) angepaßt werden, indem das Bildfeld in der Probe, das das Muster 128 überdeckt, verändert wird. Alternativ kann die Brennweite der Linsen 110, 121 dazu eingestellt werden.

### Die Wirkung des Strahlteilers 113 ist wie folgt:

Durch die geometrische Anordnung der Spiegelflächenelemente 123a-d und die darauf fokussierten Teilstrahlen Sa-d entsteht das Punkt-Muster 128 mit regelmäßig angeordneten Lichtflecken 126 auf der Probe 103. Bei einer Anwendung in der Fluoreszenzmikroskopie wird somit an den Lichtflecken 126 Fluoreszenz angeregt. Diese entsteht räumlich inkohärent und füllt somit homogen die rückwärtige Brennebene des Mikroskops 106 (zwischen den Elementen 106 und 107 als durchgezogene Linie eingezeichnet). Analoges gilt für diffuse Reflektion, die ebenfalls zur Bildgewinnung herangezogen werden kann.

Da die rückwärtige Brennebene mit der Pupille, in welcher der Strahlteiler 113 angeordnet ist, konjugiert ist, füllt die zu detektierende inkohärente Strahlung auch die gesamte Pupille, in der der Strahlteiler 113 angeordnet ist und leuchtet somit die gesamte Strahlteilerfläche 122 aus. Spiegelnd reflektierte Beleuchtungsstrahlung wird dagegen auf die Spiegelflächenelemente 123a-d fokussiert und somit zur Beleuchtungsquelle 105 zurückgeworfen.

Im Ergebnis passiert den Strahlteiler 113 nur die zu detektierende Strahlung, die räumlich inkohärent, d.h. ungerichtet in der Probe 103 entstand. Der Strahlteiler 113 bewirkt damit eine Trennung von Detektionsstrahlung und spiegelnd reflektierter Beleuchtungsstrahlung ohne daß eine chromatische Einstellung vorgenommen werden müßte. Dies hatte den Vorteil, daß nicht nur eine höhere Ausbeute erreicht wird, auch kann der Strahlteiler 113 für verschiedenste Beleuchtungswellenlängen und Detektionswellenlängen verwendet werden. Die üblicherweise bei Farbteilern vorgesehenen Austauschmechanismen bzw. Wechselräder sind nicht nötig.

Die Detektion (in Figur 19 ist der Pupillenstrahlengang gestrichelt gezeichnet) erfolgt beispielshalber mit dem als Matrixdetektor ausgebildeten Detektor 104, dem optional eine Pinholemaske vorgeordnet sein kann. Dabei werden die beleuchteten Spots konfokal abgebildet. Diese Maske kann in einer Zwischenbildebene des Beobachtungsstrahlenganges vor dem Detektor liegen oder alternativ in die Relaisoptik (zwischen 110 und 108b) gestellt werden. Letzteres verbessert das Strahlprofil auch beleuchtungsseitig.

Das Abtasten der Probe 103 erfolgt durch Wirkung des Scanners 109. Dabei ist eine sehr viel geringere Verschiebung der beleuchtenden Lichtflecke auf der Probe 103 nötig, als dies bei einem Einzelpunktscanner erforderlich ist. Die einzelnen Lichtflecke 126 werden vom Scanner 109 simultan verschoben, da sie durch Interferenz in der Probe entstehen. Es genügt deshalb eine Bewegung mittels des Scanners 109, die den Dunkelbereich 127 zwischen benachbarten Lichtflecken 126 abtastet. Die scannende Verschiebung der Lichtflecke erfolgt also vorzugsweise nur innerhalb einer Periodenlänge des periodischen regelmäßigen Musters 128.

Der in Figur 19 gezeigte Aufbau kann auch dahingehend invertiert werden, daß der Detektionsstrahlengang ab dem Strahlteiler 113 und die Beleuchtungsquelle 105 vertauscht werden. Der Strahlteiler 113 ist dann bezüglich der Verspiegelung negativ zu der in Figur 21 gezeigten Bauweise, d.h. die Spiegelflächenelemente 123a-d sind Löcher in einer Spiegelfläche.

Der Strahlteiler 113 kann auch mit einer Nipkow-Scheibe als Scanner kombiniert werden, bzw. als solche integriert werden.

Die Ausgestaltung gemäß Fig. 19 bis 22 kann weiter besonders vorteilhaft auch mit der Bauweise bzw. dem Verfahren gemäß Fig. 4 bis 18 kombiniert werden, wobei auch nur einzelne Merkmale (z.B. der Strahlteiler 113) zur Kombination herangezogen werden können.

## Patentansprüche

1. Auflösungsgesteigertes Lumineszenz-Mikroskopieverfahren, bei dem
- eine Probe (P, 24) durch Einstrahlung von Anregungsstrahlung (A) mit einer Anregungsstrahlungsverteilung zur Emission von bestimmter Lumineszenzstrahlung (F) angeregt wird und ein Bild der lumineszierenden Probe (P, 24) gewonnen wird, wobei
- die lumineszierende Probe (P, 24) aus einem ersten Lumineszenz-Zustand (5) in einen zweiten Lumineszenz-Zustand (6) überführbar ist, in dem die Probe (P, 24) gegenüber dem ersten Zustand (5) verminderte Anregbarkeit zur Emission der bestimmten Lumineszenzstrahlung (F) aufweist, und
- das Bild der lumineszierenden Probe (P, 24) eine gegenüber der Anregungsstrahlungsverteilung gesteigerte Ortsauflösung hat,
**dadurch gekennzeichnet, daß**
- die Anregungsstrahlung (A) mit nur einer Wellenlänge eingestrahlt wird,
- im ersten Lumineszenz-Zustand (5) die Anregbarkeit der Probe (P, 24) zur Emission der bestimmten Lumineszenzstrahlung (F) mit steigender Anregungsstrahlungsleistung bis zu einem Maximalwert (18), welcher einem Anregungsstrahlungsleistungs-Schwellwert (19) zugeordnet ist, steigt,
- die lumineszierende Probe (P, 24) aus dem ersten Lumineszenz-Zustand (5) in den zweiten Lumineszenz-Zustand (6) durch Einstrahlung der Anregungsstrahlung (A) mit einer Leistung oberhalb des Schwellwertes (19) bringbar ist,
- die Probe (P, 24) in Teil-Bereichen (B1) in den ersten Zustand (5) und in angrenzenden Teil-Bereichen (B2) in den zweiten Zustand (6) versetzt wird, indem die Einstrahlung der Anregungsstrahlung (A) mit der Anregungsstrahlungsverteilung erfolgt, die zumindest ein örtliches Leistungsmaximum über dem Schwellwert (19) und zumindest ein örtliches, lokales Leistungsminimum (45) unter dem Schwellwert aufweist,
- das Bild der lumineszierenden Probe (P, 24) Proben-Bereiche (B1) im ersten Zustand (5) und Proben-Bereiche (B2) im zweiten Zustand (6) umfaßt, wobei zum Bild der lumineszierenden Probe (P, 24) überwiegend die Proben-Bereiche (B1) im ersten Zustand (5) beitragen und dadurch das Bild die gegenüber der Anregungsstrahlungsverteilung gesteigerte Ortsauflösung hat.

2. Verfahren nach Anspruch 1, bei dem eine Probe (P, 24) verwendet wird, die nach Überführung in den zweiten Zustand (6) wieder in den ersten Zustand (5) zurückkehrt, entweder durch aktive Einwirkung oder spontan.

3. Verfahren nach Anspruch 2, bei dem eine Rücksetzstrahlung (R) eingestrahlt wird, die die Probe (P, 24) aus dem zweiten Zustand (6) in den ersten Zustand (5) zurücksetzt und die von der Anregungsstrahlung (A) verschiedene optische Eigenschaften hat.

4. Verfahren nach einem der obigen Ansprüche, bei dem das Bild durch Abscannen der Probe (P, 24) mit einem Spot-, Zeilen- oder Multispotmuster (58) gewonnen wird und insbesondere zwischen zwei Scanschritten Rücksetzstrahlung (R) eingestrahlt wird.

5. Verfahren nach einem der obigen Ansprüche, bei dem eine Probe (P, 24) verwendet wird, die bei einer Anregungsstrahlungsleistung über dem Schwellwert (19) nicht luminesziert, Lumineszenzstrahlung mit anderen Eigenschaften als die bestimmte Lumineszenzstrahlung (F) abstrahlt und/oder geänderte, zu verminderter Lumineszenz führende Eigenschaften aufweist.

6. Verfahren nach einem der Ansprüche 1 bis 5, bei dem die Anregungsstrahlungsverteilung beugungsbegrenzt ist.

7. Verfahren nach Anspruch 6, bei dem eine torusförmig verteilte Anregungsstrahlung (A) verwendet wird und vorzugsweise zusätzlich bei der Detektion der Lumineszenzstrahlung (F) außerhalb des Torus liegende Proben-Bereiche ausgeblendet werden.

8. Verfahren nach einem der Ansprüche 1 bis 5, bei dem die Anregungsstrahlungsverteilung (A) eine linienförmige oder flächige strukturierte Probenbeleuchtung, insbesondere gemäß eines Streifen- oder Kreuzgitters, aufweist sowie bei dem eine ortsaufgelöste Detektion zur Bildgewinnung verwendet wird.

9. Verfahren nach einem der obigen Ansprüche, bei dem eine konfokale Detektion (D) von im ersten Zustand (5) befindlichen Proben-Bereichen (B1) durchgeführt wird.

10. Verfahren nach einem der Ansprüche 1 bis 9, bei dem eine Tiefenauflösungssteigerung entlang der optischen Achse (OA) erfolgt, indem das Leistungsminimum (45) unter dem Schwellwert (19) und das Leistungsmaximum über dem Schwellwert (19) entlang der optischen Achse (OA) benachbart sind.

11. Verfahren nach einem der Ansprüche 1 bis 9, bei dem eine Tiefenauflösungssteigerung entlang der optischen Achse erfolgt, indem zuerst in einen die Fokusebene enthaltenden Tiefenbereich Anregungsstrahlung (A) mit einer Leistung über dem Schwellwert eingestrahlt wird, in die Fokusebene Rücksetzstrahlung (R) eingestrahlt wird und anschließend die Anregungsstrahlung (A) mit der Anregungsstrahlungsverteilung eingestrahlt wird, wobei das Leistungsminimum (45) im Fokusbereich liegt.

12. Verfahren nach einem der obigen Ansprüche, bei dem entweder in Proben-Bereichen (B1), die den ersten Zustand (5), oder in Proben-Bereichen (B2), die den zweiten Zustand (6) aufweisen, die Anregungsstrahlungsleistung gemäß einer Referenzfrequenz moduliert wird, und diese Referenzfrequenz bei der Detektion der Lumineszenzstrahlung im Wege der Lock-In-Technik verwendet wird.

13. Verfahren nach Anspruch 12, bei dem zusätzliche aus einem Gleichsignalanteil (S) ein niedrig aufgelöstes Bild gewonnen wird.

14. Verfahren nach einem der obigen Ansprüche, bei dem eine fluoreszierende Probe (P, 24) verwendet wird, insbesondere eine mit mindestens einem Fluorophor versehene Probe (P, 24).

15. Verfahren nach einem der obigen Ansprüche, bei dem zusätzlich ein Bild mit Anregungsstrahlungsverteilung ohne Leistungsminimum (45) unter dem Schwellwert aufgenommen und zur Differenzbildung verwendet wird.

16. Verfahren nach einem der obigen Ansprüche, bei dem eine Lumineszenzkennlinie (17), die emittierte Lumineszenzleistung als Funktion der Anregungsstrahlungsleistung angibt, ausgewertet, daraus der Schwellwert (19) ermittelt und/oder die Anregungsstrahlungsverteilung kennlinienabhängig gewählt wird.

17. Verfahren nach einem der obigen Ansprüche, bei dem die Anregungsstrahlungsverteilung iterativ unter Auswertung der Bildauflösung optimiert wird.

## Claims

1. A method for resolution enhanced luminescence microscopy, in which method
- a sample (P; 24) is excited to emit defined luminescence radiation (F) by irradiation of excitation radiation (A) having an excitation radiation distribution, and an image of the luminescent sample (P, 24) is obtained, wherein
- the luminescent sample (P, 24) is transferable from a first mode of luminescence (5) to a second mode of luminescence (6) in which second mode the sample (P, 24) exhibits an excitability to emit the defined luminescence radiation (F) which excitability is reduced as compared to the first mode (5), and
- the image of the luminescent sample (P, 24) has a spatial resolution enhanced as compared to the excitation radiation distribution,
**characterized in that**
- the excitation radiation (A) comprising only a single wavelength is irradiated,
- the excitability of the sample (P, 24) to emit the defined luminescence radiation (F) increases with increasing excitation radiation power to a maximum value (18) which is assigned to an excitation radiation power threshold (19),
- the luminescent sample (P, 24) can be brought from the first mode of luminescence (5) to the second mode of luminescence (6) by irradiation of excitation radiation (A) having a power above the threshold (19),
- the sample (P, 24) is transferred in sub-domains (B1) into the first mode (5) and in adjacent sub-domains (B2) into the second mode (6) by effecting irradiation of the excitation radiation (A) comprising the excitation radiation distribution which has at least one local power maximum being above the threshold (19) and at least one local relative power minimum (55) being below the threshold,
- the image of the luminescent sample (P, 24) comprises sample domains (B1) in the first mode (5) and sample domains (B2) in the second mode (6), wherein the sample domains (B1) being in the first mode (5) predominantly contribute to the image of the luminescent sample (P, 24) whereby the image has a spatial resolution being enhanced as compared to the excitation radiation distribution.

2. The method according to claim 1, in which a sample (P, 24) is used which returns to the first mode (5) after a transfer to the second mode (6), which return is either in response to active influence or spontaneous.

3. The method according to claim 2, in which reset radiation (R) is irradiated which resets the sample (P, 24) from the second mode (6) to the first mode (5) and which has optical properties differing from that of the excitation radiation (A).

4. The method according to one of the above claims, in which the image is obtained by scanning the sample (P, 24) with a spot pattern, a line pattern or a multispot pattern (58) and in which in particular reset radiation (R) is irradiated between two scan steps.

5. The method according to one of the above claims, in which a sample (P, 24) which, at excitation radiation powers above the threshold (19), comprises at least one of the following: it does not emit luminescence radiation, it radiates luminescence radiation having properties different from that of the defined luminescence radiation (F), and it has properties leading to modified or reduced luminescence.

6. The method according to one of the claims 1 through 5, in which the excitation radiation distribution is diffraction limited.

7. The method according to claim 6, in which a torus-like distributed excitation radiation (A) is used and in which advantageously additionally sample domains being located outside the torus are shaded off when detecting the luminescence radiation (F).

8. The method according to one of the claims 1 through 5, in which the excitation radiation distribution (A) comprises a line-type or two-dimensional structured sample illumination, in particular according to a line grating grid or a cross-line grating grid, and in which a spatial resolving detection is used for image generation.

9. The method according to one of the above claims, in which a confocal detection (D) of sample domains (B1) being in the first mode (5) is carried out.

10. The method according to one of the claims 1 through 9, in which a depth resolution enhancement along the optical axis (OA) is effected by the power minimum (45) which is below the threshold (19) and the power maximum which is above the threshold (19) being adjacent as seen along the optical axis (OA).

11. The method according to one of the claims 1 through 9, wherein a depth resolution enhancement along the optical axis is effected first by excitation radiation (A) having a power above the threshold being irradiated in the depth range containing the focal plane, reset radiation (R) being irradiated in the focal plane and afterwards excitation radiation (A) having the excitation radiation distribution being irradiated, wherein the power minimum (45) is located in the focus zone.

12. The method according to one of the above claims, wherein the excitation radiation power is modulated according to a reference frequency either in sample domains (B1) comprising the first mode (5) or in sample domains (B2) comprising the second mode (6), wherein the reference frequency is used by means of lock-in technique when detecting the luminescence radiation.

13. The method according to claim 12, wherein additionally a low resolving image is obtained from a DC signal portion (S).

14. The method according to one of the above claims, wherein a fluorescent sample (P, 24) is used, in particular a sample (P, 24) provided with at least one fluorophor.

15. The method according to one of the above claims, wherein additionally an image is taken using an excitation radiation distribution lacking a power minimum (45) below the threshold, wherein this additional image is uses for calculating a difference.

16. The method according to one of the above claims, wherein a luminescence characteristic curve (17) is evaluated, which luminescence characteristic curve (17) defines emitted luminescence power as a function of excitation radiation power, wherein the threshold (19) is determined from this evaluation and/or the excitation radiation distribution is selected on base of the characteristic curve.

17. The method according to one of the above claims, wherein the excitation radiation distribution is optimised iteratively while evaluating the image resolution.

## Revendications

1. Procédé de microscopie à luminescence à résolution améliorée, dans lequel
- un échantillon (P, 24) est excité par irradiation d'un rayonnement d'excitation (A) avec une distribution de rayonnement d'excitation pour l'émission d'un rayonnement luminescent déterminé (F), et une image de l'échantillon luminescent (P, 24) est obtenue, dans lequel
- l'échantillon luminescent (P, 24) peut être amené à passer d'un premier état de luminescence (5) à un deuxième état de luminescence (6), dans lequel l'échantillon (P, 24) présente par rapport au premier état (5) une excitabilité réduite pour l'émission du rayonnement luminescent déterminé (F), et
- l'image de l'échantillon luminescent (P, 24) présente une résolution locale améliorée par rapport à la distribution de rayonnement d'excitation,
**caractérisé en ce que**
- le rayonnement d'excitation (A) est irradié à une seule longueur d'onde,
- dans le premier état de luminescence (5), l'excitabilité de l'échantillon (P, 24) pour l'émission du rayonnement luminescent déterminé (F) augmente avec une puissance de rayonnement d'excitation croissante jusqu'à une valeur maximale (18) qui est attribuée à une valeur de seuil (19) de puissance de rayonnement d'excitation,
- l'échantillon luminescent (P, 24) peut être amené du premier état de luminescence (5) au deuxième état de luminescence (6) par l'irradiation du rayonnement d'excitation (A) avec une puissance au-dessus de la valeur de seuil (19),
- dans des zones partielles (B1), l'échantillon (P, 24) est amené dans le premier état (5), et dans des zones partielles adjacentes (B2), l'échantillon est amené dans le deuxième état (6), **en ce que** l'irradiation du rayonnement d'excitation (A) s'effectue avec la distribution de rayonnement d'excitation qui présente au moins un maximum de puissance local au-dessus de la valeur de seuil (19) et au moins un minimum de puissance local (45) localisé, au-dessous de la valeur de seuil,
- l'image de l'échantillon luminescent (P, 24) comprend des zones d'échantillon (B1) dans le premier état (5) et des zones d'échantillon (B2) dans le deuxième état (6), dans lequel ce sont surtout les zones d'échantillon (B1) dans le premier état (5) qui contribuent à l'image de l'échantillon luminescent (P, 24), et l'image présente ainsi une résolution locale améliorée par rapport à la distribution de rayonnement d'excitation.

2. Procédé selon la revendication 1, dans lequel un échantillon (P, 24) est utilisé qui, après un passage au deuxième état (6), retourne au premier état (5), soit sous l'effet d'une action directe, soit spontanément.

3. Procédé selon la revendication 2, dans lequel un rayonnement de réinitialisation (R) est irradié qui réinitialise l'échantillon (P, 24) du deuxième état (6) au premier état (5) et qui présente propriétés optiques différentes du rayonnement d'excitation (A).

4. Procédé selon l'une quelconque des revendications précédentes, dans lequel l'image est obtenue par le balayage de l'échantillon (P, 24) avec un motif spot, à lignes ou multispot (58), et en particulier entre deux étapes de balayage, un rayonnement de réinitialisation (R) est injecté.

5. Procédé selon l'une quelconque des revendications précédentes, dans lequel un échantillon (P, 24) est utilisé qui n'est pas luminescent à une puissance de rayonnement d'excitation au-dessus de la valeur de seuil (19), qui émet un rayonnement luminescent ayant d'autres propriétés que le rayonnement luminescent déterminé (F) et/ou qui présente des propriétés modifiées conduisant à une luminescence réduite.

6. Procédé selon l'une quelconque des revendications 1 à 5, dans lequel la distribution de rayonnement d'excitation est limitée par diffraction.

7. Procédé selon la revendication 6, dans lequel un rayonnement d'excitation (A) distribué en forme de tore est utilisé, et de préférence en plus, lors de la détection du rayonnement luminescent (F), des zones d'échantillon situées en dehors du tore sont filtrées.

8. Procédé selon l'une quelconque des revendications 1 à 5, dans lequel la distribution de rayonnement d'excitation (A) présente un éclairage d'échantillon structuré en forme de ligne ou en nappe, en particulier selon un réseau lamellaire ou croisé, ainsi que dans lequel une détection à résolution locale est utilisée pour l'obtention de l'image.

9. Procédé selon l'une quelconque des revendications précédentes, dans lequel une détection confocale (D) est effectuée sur des zones d'échantillon (B1) se trouvant dans le premier état (5).

10. Procédé selon l'une quelconque des revendications 1 à 9, dans lequel une augmentation de la résolution en profondeur a lieu le long de l'axe optique (OA) en ce que le minimum de puissance (45) au-dessous de la valeur de seuil (19) et le maximum de puissance au-dessus de la valeur de seuil (19) sont voisins le long de l'axe optique (OA).

11. Procédé selon l'une quelconque des revendications 1 à 9, dans lequel une augmentation de la résolution en profondeur a lieu le long de l'axe optique en ce que c'est d'abord dans une zone de profondeur contenant le plan focal qu'un rayonnement d'excitation (A) à une puissance au-dessus de la valeur de seuil est irradié, un rayonnement de réinitialisation (R) est irradié dans le plan focal, et ensuite, le rayonnement d'excitation (A) est irradié avec la distribution de rayonnement d'excitation, dans lequel le minimum de puissance (45) se situe dans la plage focale.

12. Procédé selon l'une quelconque des revendications précédentes, dans lequel soit dans des zones d'échantillon (B1) présentant le premier état (5), soit dans des zones d'échantillon (B2) présentant le deuxième état (6), la puissance de rayonnement d'excitation est modulée selon une fréquence de référence, et cette fréquence de référence est utilisée lors de la détection du rayonnement luminescent par la voie de la technique de blocage.

13. Procédé selon la revendication 12, dans lequel en plus, une image basse résolution est obtenue à partir d'une composante de signal continu (S).

14. Procédé selon l'une quelconque des revendications précédentes, dans lequel un échantillon fluorescent (P, 24) est utilisé, en particulier un échantillon (P, 24) muni d'au moins un fluorophore.

15. Procédé selon l'une quelconque des revendications précédentes, dans lequel en plus, une image avec une distribution de rayonnement d'excitation sans minimum de puissance (45) au-dessous de la valeur de seuil est enregistrée et utilisée pour la formation de différence.

16. Procédé selon l'une quelconque des revendications précédentes, dans lequel une courbe caractéristique de luminescence (17) qui indique la puissance de luminescence émise en fonction de la puissance de rayonnement d'excitation est évaluée, la valeur de seuil (19) est déterminée à partir de celle-ci et/ou la distribution de rayonnement d'excitation est choisie en fonction de la courbe caractéristique.

17. Procédé selon l'une quelconque des revendications précédentes, dans lequel la distribution de rayonnement d'excitation est optimisée de façon itérative tout en évaluant la résolution d'image.
